# EUROPEAN PATENT APPLICATION

(11) **EP 4 800 336 A1**
(43) Date of publication of application: **02.09.2026**
(21) Application number: 25768516.4
(22) Date of filing: 17.02.2025
(51) Int. Cl.: F25D 29/00, F25D 15/00, B01D 46/00

(54) **REFRIGERATOR AND METHOD FOR CONTROLLING REFRIGERATOR**

(30) Priority: 07.03.2024 KR 20240032703; 13.06.2024 KR 20240077224
(71) Applicant: Samsung Electronics Co., Ltd., Suwon-si, Gyeonggi-do 16677 (KR)
(72) Inventor: KANG, Seungwan, Suwon-si Gyeonggi-do 16677 (KR); JUNG, Joontack, Suwon-si Gyeonggi-do 16677 (KR); CHA, Sangyoul, Suwon-si Gyeonggi-do 16677 (KR)
(74) Representative: Appleyard Lees IP LLP
(86) International application number: PCT/KR2025/002285
(87) International publication number: WO 2025/187992

(57) **Abstract**

A refrigerator may include a main body forming a storeroom; a thermoelectric element including a heater and a cooler, the cooler configured to cool air inside the storeroom; a fan configured to operate to bring air from outside the main body to the heater to be heated by the heater and exhaust the heated air to outside the main body; a filter configured to filter foreign materials from the air brought from outside the main body to the heater by operation of the fan; and a controller configured to notify that the filter is clogged in response to a rotation speed of the fan being higher than a reference rotation speed.

## Description

### [Technical Field]

The disclosure relates to a refrigerator equipped with a thermoelectric element for cooling a storeroom and a method for controlling the refrigerator.

### [Background Art]

The refrigerator is a home appliance having a main body with storerooms and a cold air supply provided for supplying cold air into the storerooms to keep things fresh.

For the cold air supply of the refrigerator, a thermoelectric cooling device that causes heating and cooling actions through the Peltier effect may be used. The thermoelectric cooling device may include a thermoelectric element. The thermoelectric element may have a heater formed on one side and a cooler formed on the other side, and when a current is applied to the thermoelectric element, the heater may cause a heating action and the cooler may cause a heat absorption action.

The thermoelectric cooling device may be equipped with a heat sink, a cooling sink, a heat radiation fan, a cooling fan, a heat radiation duct and a cooling duct to increase cooling efficiency for the storeroom through the thermoelectric cooling device.

### [Disclosure]

### [Technical Problem]

The disclosure provides a refrigerator and method for controlling the refrigerator, capable of notifying clogging of a filter to the user.

The disclosure provides a refrigerator and method for controlling the refrigerator, capable of notifying whether filter cleaning is completed to the user.

Technological objectives of the disclosure are not limited to what are mentioned above, and throughout the specification, it will be clearly appreciated by those of ordinary skill in the art that there may be other technological objectives unmentioned.

### [Technical Solution]

In accordance with the present disclosure, a refrigerator may include a main body forming a storeroom; a thermoelectric element including a heater and a cooler, the cooler configured to cool air inside the storeroom; a fan configured to operate to bring air from outside the main body to the heater to be heated by the heater and exhaust the heated air to outside the main body; a filter configured to filter foreign materials from the air brought from outside the main body to the heater by operation of the fan; and a controller configured to notify that the filter is clogged in response to a rotation speed of the fan being higher than a reference rotation speed.

The controller may be further configured to: based on a lapse of a first period of time after the refrigerator is powered on, operate the fan for a second period of time, and based on the rotation speed of the fan during the second period of time, set the reference rotation speed.

The controller may be further configured to, based on an input indicating the filter is clean being received after notification that the filter is clogged, operate the fan for a third period of time.

The controller may be further configured to, based on a difference between the rotation speed of the fan during the third period of time and the reference rotation speed, determine whether the filter is clean.

The controller may be further configured to reset the reference rotation speed in response to determination that the filter is clean.

The controller may be further configured to notify that the filter is clogged in response to determination that the filter is not clean.

The reference rotation speed may include: a first reference rotation speed, and a second reference rotation speed, and the controller may be further configured to: operate the fan at a first level for the second period of time and based on the rotation speed of the fan operated at the first level, set the first reference rotation speed, operate the fan at a second level higher than the first level for the second period of time and based on the rotation speed of the fan operated at the second level, set the second reference rotation speed, notify that the filter is clogged in response to the rotation speed of the fan operated at the first level being higher than the first reference rotation speed, and notify that the filter is clogged in response to the rotation speed of the fan operated at the second level being higher than the second reference rotation speed.

The controller may be further configured to: based on an input indicating the filter is clean being received after notification that the filter is clogged, operate the fan at the first level for a third period of time and based on a difference between the rotation speed of the fan operated at the first level for the third period of time and the first reference rotation speed, determine whether the filter is clean, and operate the fan at the second level for the third period of time and based on a difference between the rotation speed of the fan operated at the second level for the third period of time and the second reference rotation speed, determine whether the filter is clean.

The thermoelectric element may be configured to operate so that a rate of temperature change of at least one of the heater and the cooler increases, and the controller may be further configured to: notify that the filter is clogged in response to: the rotation speed of the fan being higher than the reference rotation speed, and after the thermoelectric element is operated, the rate of temperature change of the at least one of the heater and the cooler is smaller than a reference value.

The refrigerator may further comprise: a communication interface configured to communicate with an external device.

The controller may be further configured to transmit information regarding the filter being clogged to the external device through the communication interface in response to the rotation speed of the fan being higher than the reference rotation speed.

In accordance with the present disclosure, a method of controlling a refrigerator including a main body forming a storeroom, a thermoelectric element including a heater and a cooler, the cooler configured to cool air inside the storeroom, a fan configured to operate to bring air from outside the main body to the heater to be heated by the heater and exhaust the heated air outside the main body, and a filter configured to filter foreign materials from the air brought from outside the main body to the heater by operation of the fan, and a controller, the method may comprise: by the controller, notifying that the filter is clogged in response to a rotation speed of the fan being higher than a reference rotation speed.

The method may further comprise: by the controller, based on a lapse of a first period of time after the refrigerator is powered on, operating the fan for a second period of time, and based on the rotation speed of the fan during the second period of time, setting the reference rotation speed.

The method may further comprise: by the controller, based on an input indicating the filter is clean being received after notification that the filter is clogged, operating the fan for a third period of time.

The method may further comprise: by the controller, based on a difference between the rotation speed of the fan during the third period of time and the reference rotation speed, determining whether the filter is clean.

The method may further comprise: by the controller, resetting the reference rotation speed in response to determining that the filter is clean.

### [Advantageous Effects]

According to the disclosure, a refrigerator and a method for controlling the refrigerator, capable of notifying a user of clogging of a filter, may be provided.

According to the disclosure, a refrigerator and a method for controlling the refrigerator, capable of notifying a user of whether cleaning of a filter is completed, may be provided.

### [Description of Drawings]

FIG. 1 illustrates a refrigerator, according to an embodiment of the disclosure.
FIG. 2 illustrates a refrigerator with doors open, according to an embodiment of the disclosure.
FIG. 3 illustrates an upper portion of a storeroom of a refrigerator viewed from below, according to an embodiment of the disclosure.
FIG. 4 is a schematic side cross-sectional view of a refrigerator, according to an embodiment of the disclosure.
FIG. 5 is a cross-sectional view along line I-I of FIG. 2.
FIG. 6 is a perspective view illustrating a coupling structure between a thermoelectric module and an upper wall of a refrigerator, according to an embodiment of the disclosure.
FIG. 7 is an exploded view of a heat radiation fan and a thermoelectric module, according to an embodiment of the disclosure.
FIG. 8 illustrates a first heat radiation path, a second heat radiation path and a circulation path, according to an embodiment of the disclosure.
FIG. 9 illustrates a top cover and a heat radiation duct, according to an embodiment of the disclosure.
FIG. 10 is a control block diagram of a refrigerator, according to an embodiment of the disclosure.
FIG. 11 is a conceptual diagram illustrating an example of an entity to perform a method of controlling a refrigerator, according to an embodiment of the disclosure.
FIG. 12 illustrates an example of a flowchart of a method of controlling a refrigerator, according to an embodiment of the disclosure.
FIG. 13 illustrates an example of an interface provided by a refrigerator or a user device, according to an embodiment of the disclosure.
FIG. 14 illustrates another example of an interface provided by a refrigerator or a user device, according to an embodiment of the disclosure.
FIG. 15 illustrates an example of an interface provided by the refrigerator or the user device when a user input is received through the interface of FIG. 13 or 14.
FIG. 16 illustrates an example of a flowchart of a method of controlling a refrigerator, according to an embodiment of the disclosure.
FIG. 17 illustrates an example of a flowchart of a method of controlling a refrigerator, according to an embodiment of the disclosure.
FIG. 18 illustrates an example of a flowchart of a method of controlling a refrigerator for notifying filter clogging based on rotation speed of a fan and temperature of a thermoelectric element, according to an embodiment of the disclosure.

### [Modes of the Invention]

It is understood that various embodiments of the disclosure and associated terms are not intended to limit technical features herein to particular embodiments, but encompass various changes, equivalents, or substitutions.

Like reference numerals may be used for like or related elements throughout the drawings.

The singular form of a noun corresponding to an item may include one or more items unless the context states otherwise.

Throughout the specification, "A or B", "at least one of A and B", "at least one of A or B", "A, B or C", "at least one of A, B and C", and "at least one of A, B, or C" may each include any one or all the possible combinations of A, B and C.

The expression "and/or" is interpreted to include a combination or any of associated elements.

A unit, module or member may be implemented in hardware or software. A plurality of units, modules or members may be implemented as one component, or a single unit, module or member may include multiple components.

Terms like "first", "second", etc., may be simply used to distinguish an element from another, without limiting the elements in a certain sense (e.g., in terms of importance or order).

When an element is mentioned as being "coupled" or "connected" to another element with or without an adverb "functionally" or "operatively", it means that the element may be connected to the other element directly (e.g., wiredly), wirelessly, or through a third element.

It will be further understood that the terms "comprise" and/or "comprising," when used in this specification, specify the presence of stated features, integers, steps, operations, elements, parts or combinations thereof, but do not preclude the possible presence or addition of one or more other features, integers, steps, operations, elements, components, and/or groups thereof.

When an element is mentioned as being "connected to", "coupled to", "supported on" or "contacting" another element, it includes not only a case that the elements are directly connected to, coupled to, supported on or contact each other but also a case that the elements are connected to, coupled to, supported on or contact each other through a third element.

Throughout the specification, when an element is mentioned as being located "on" another element, it implies not only that the element is abut on the other element but also that a third element exists between the two elements.

The terms "forward or front", "rearward or back", "left", "right", "upper or up" or "lower or down" as herein used are defined with respect to the drawings, but the terms may not restrict the shapes and position of the respective components. For example, the front may be defined as +X direction and the back may be defined as -X direction. For example, with respect to the drawings, the right may be defined as +Y direction and the left may be defined as -Y direction. For example, with respect to the drawings, the upper direction may be defined as +Z direction and the lower direction may be defined as -Z direction.

Reference will now be made in detail to embodiments of the disclosure, which are illustrated in the accompanying drawings.

In an embodiment, a refrigerator may include a main body.

The main body may include insulation. The insulation may insulate inside and outside of the storeroom so that the temperature in the storeroom is maintained at a set suitable temperature without being influenced by external environments of the storeroom. In an embodiment, the insulation may include foam insulation such as polyurethane foam. In an embodiment, the insulation may include an additional vacuum insulation in addition to the foam insulation, or may include only the vacuum insulation instead of the foam insulation.

Various items such as foods, medicines, cosmetics, etc., may be stored in the storeroom, and the storeroom may be formed with one side open to put in or take out the items.

The refrigerator may include one or more storerooms. When there are two or more storerooms formed in the refrigerator, each storeroom may have a different use and may be maintained at a different temperature. For this, the storerooms may be separated by partition walls including insulation.

The storerooms may be provided to be each maintained at a suitable temperature range, and may include a fridge, a freezer or a temperature-changing room classified by the use and/or the temperature range. The fridge may be maintained at a suitable temperature for keeping items refrigerated, and the freezer may be maintained at a suitable temperature for keeping items frozen. Refrigeration may refer to cooling the items to an extent that the items are not frozen, and for example, the fridge may be maintained at a range of 0 to 7 degrees Celsius above zero. Freezing may refer to freezing the items or cooling the items in a frozen state, and for example, the freezer may be maintained at a range of 20 to 1 degree Celsius below zero. The temperature-changing room may be used as one of the fridge or the freezer according to or regardless of the user's choice.

The storerooms may be called many different names such as "veggie room", "fresh room", "cooling room" and "ice-making room" in addition to the names such as "fridge chamber", "freezer chamber" and "temperature-changing room", and the terms such as "fridge chamber", "freezer chamber" and "temperature-changing room" need to be understood as encompassing storerooms having respective uses and temperature ranges.

In an embodiment, the refrigerator may include at least one door arranged to open or close the one open side of the storeroom. A door may be equipped to open or close each of the one or more storerooms, or one door may be equipped to open or close multiple storerooms. The door may be rotationally or slidably installed at the front of the main body.

The door may be arranged to close the storeroom tight when closed. Like the main body, the door may include insulation to insulate the storeroom when closed.

In an embodiment, the door may include a door outer-plate that forms the front surface of the door, a door inner-plate that forms the rear surface of the door and faces the storeroom, an upper cap, a lower cap and door insulation provided inside of them.

A gasket may be arranged on edges of the door inner-plate to seal the storeroom by tightly contacting the front surface of the main body when the door is closed. The door inner-plate may include a dyke that protrudes rearward for a door basket that may keep items to be installed thereon.

In an embodiment, the door may include a door body and a front panel detachably coupled to the front side of the door body and forming the front of the door. The door body may include a door outer-plate that forms the front surface of the door body, a door inner-plate that forms the rear surface of the door body and faces the storeroom, an upper cap, a lower cap and door insulation provided inside of them.

The refrigerator may be distinguished according to the layout of the door(s) and storeroom(s) as a French door type, a side-by-side type, a bottom mounted freezer (BMF), a top mounted freezer (TMF) or a one-door refrigerator.

In an embodiment, the refrigerator may include a cold air supplier arranged to supply cold air into the storeroom.

The cold air supplier may include a machine, instrument, electronic device and/or system that combines them, which is able to produce and lead cold air to cool the storeroom.

In an embodiment, the cold air supplier may produce the cold air through a refrigeration cycle including processes of compression, condensation, expansion and evaporation of a refrigerant. For this, the cold air supplier may include a refrigeration cycle system having a compressor, a condenser, an expansion device and an evaporator that may operate the refrigeration cycle. In an embodiment, the cold air supplier may include a semiconductor such as a thermoelectric element. The thermoelectric element may cool the storeroom by heating and cooling actions through the Peltier effect.

In an embodiment, the refrigerator may include a machine room arranged for at least some parts belonging to the cold air supplier to be placed therein.

The machine room may be separated and insulated from the storeroom to prevent heat generated from the parts arranged in the machine room from being transferred to the storeroom. To emit heat from the parts arranged in the machine room, the inside of the machine room may be formed to connect to the outside of the main body.

In an embodiment, the refrigerator may include a dispenser arranged at the door to provide water and/or ice. The dispenser may be located at the door for the user to make access thereto without a need to open the door.

In an embodiment, the refrigerator may include an ice maker provided to produce ice. The ice maker may include an ice maker tray for storing water, an ice separator for separating ice from the ice maker tray, and an ice bucket for storing ice produced from the ice maker tray.

In an embodiment, the refrigerator may include a controller for controlling the refrigerator.

The controller may include a memory for storing or memorizing a program and/or data for controlling the refrigerator, and a processor for outputting control signals to control components such as the cold air supplier according to the program and/or data stored in the memory.

The memory stores or records various information, data, instructions, programs, etc., required for operation of the refrigerator. The memory may store temporary data that is generated while the control signals to control the components included in the refrigerator are being generated. The memory may include at least one or a combination of volatile memories or non-volatile memories.

The processor controls general operation of the refrigerator. The processor may control the components of the refrigerator by executing the program stored in the memory. The processor may include an extra neural processing unit (NPU) that performs operation of an artificial intelligence (AI) model. The processor may also include a central processing unit (CPU), a graphic processing unit (GPU), etc. The processor may generate control signals to control operation of the cold air supplier. For example, the processor may receive information about the temperature in the storeroom from a temperature sensor, and generate a refrigeration control signal to control an operation of the cold air supplier based on the temperature information of the storeroom.

Furthermore, the processor may process a user input to a user interface according to the program and/or data memorized/stored in the memory, and control operation of the user interface. The user interface may be provided by using an input interface and an output interface. The processor may receive the user input from the user interface. Furthermore, the processor may send a display control signal and image data for displaying an image on the user interface to the user interface in response to the user input.

The processor and the memory may be provided in one unit or separately. The processor may include one or more processors. For example, the processor may include a main processor and at least one subprocessor. The memory may include one or more memories.

In an embodiment, the refrigerator may include a processor and a memory for controlling all the components included in the refrigerator, or include a plurality of processors and a plurality of memories for controlling the components of the refrigerator, respectively. For example, the refrigerator may include a processor and a memory for controlling operation of the cold air supplier according to the output of the temperature sensor. The refrigerator may include another processor and another memory for controlling operation of the user interface according to the user input.

A communication module may communicate with an external device such as a server, a mobile device, another home appliance, etc., through a nearby access point (AP). The AP may connect a local area network (LAN) connected to the refrigerator or user device to a wide area network (WAN) connected to the server. The refrigerator or user device may be connected to the server through the WAN.

The input interface may include a key, a touch screen, a microphone, etc. The input interface may receive a user input and forward it to the processor.

The output interface may include a display, a speaker, etc. The output interface may output various notifications, alert, messages, information, etc., generated by the processor.

In the disclosure, operating an electronic part may include turning on the electronic part. In the disclosure, operating an electronic part may include maintaining an on state of the electronic part.

A working principle and embodiments of the disclosure will now be described with reference to accompanying drawings.

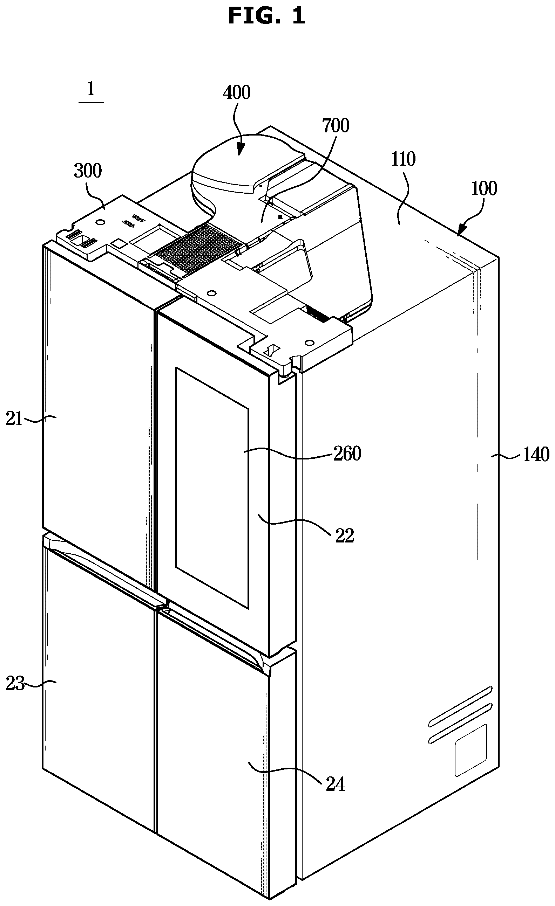

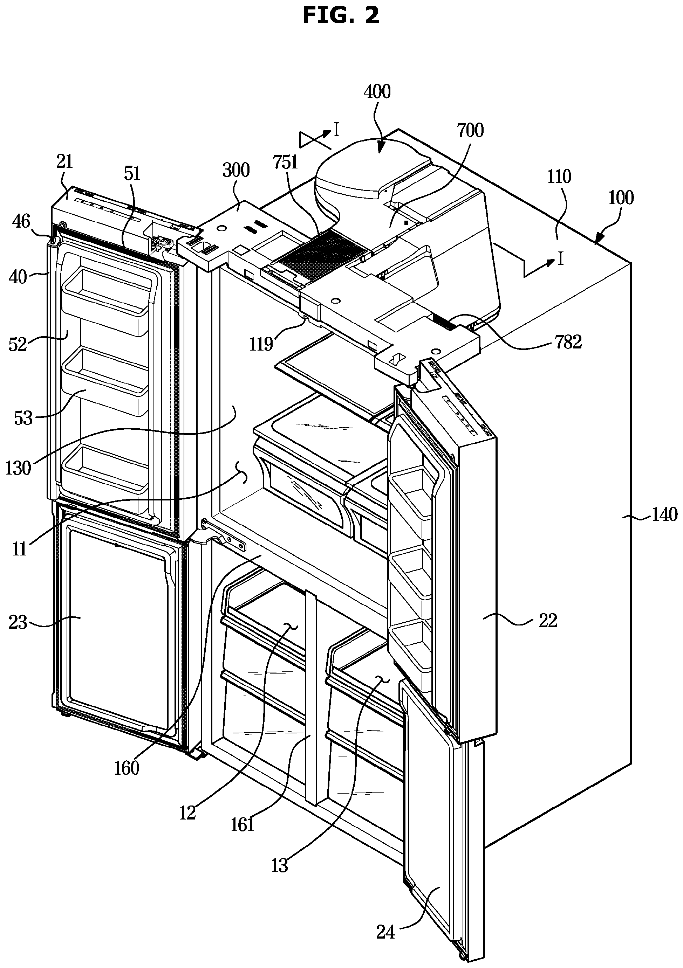

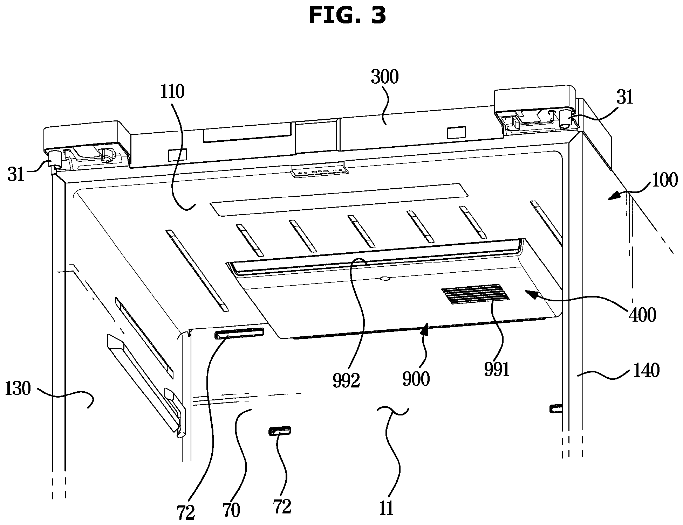

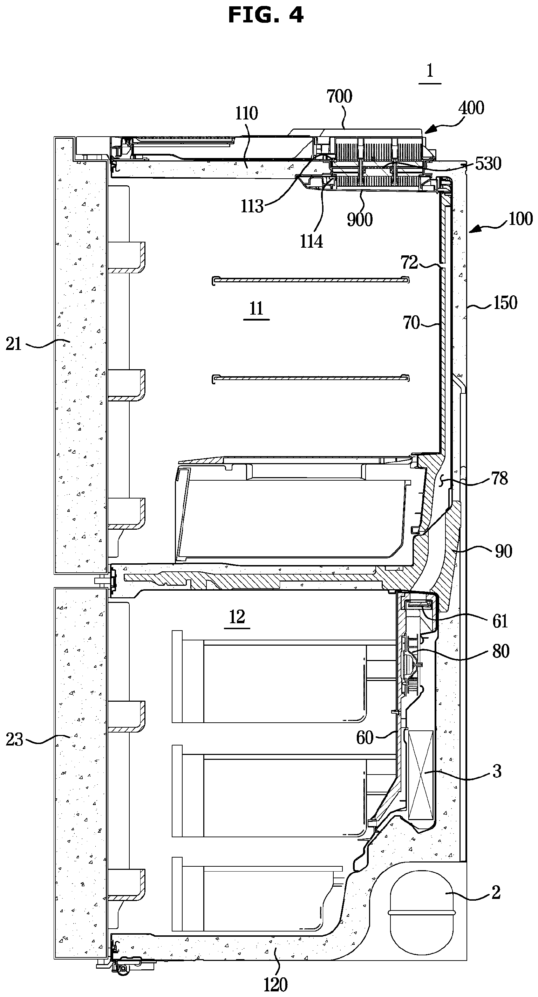

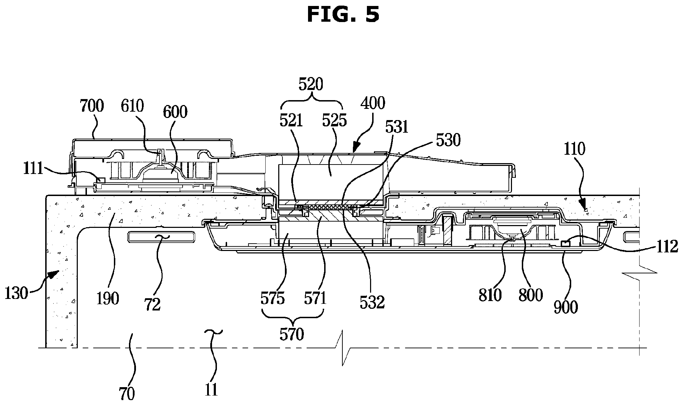

FIG. 1 illustrates a refrigerator, according to an embodiment of the disclosure. FIG. 2 illustrates a refrigerator with doors open, according to an embodiment of the disclosure. FIG. 3 illustrates an upper portion of a storeroom of a refrigerator viewed from below, according to an embodiment of the disclosure. FIG. 4 is a schematic side cross-sectional view of a refrigerator, according to an embodiment of the disclosure. FIG. 5 is a cross-sectional view along line I-I of FIG. 2.

Referring to FIG. 1, a refrigerator 1 may include a main body 100, storerooms 11, 12, and 13 formed in the main body 100, and doors 21, 22, 23, and 24 arranged to open or close the storerooms 11, 12, and 13. The doors 21, 22, 23 and 24 may include the first door 21, the second door 22, the third door 23 and/or the fourth door 24.

The refrigerator 1 may include a user interface device 260. The user interface device 260 may be installed on at least one of the doors 21, 22, 23 and 24. For example, the user interface device 260 may be installed on the second door 22 among the doors 21, 22, 23 and 24. However, the location on the refrigerator 1 at which the user interface device 260 is installed is not limited thereto, and the user interface device 260 may be installed at various locations on the refrigerator 1. For example, the user interface device 260 may be installed on a right wall 140.

Referring to FIGS. 1 to 5, the main body 100 may include an upper wall 110, a lower wall 120, a left wall 130, a right wall 140 and a rear wall 150. The upper wall 110, the lower wall 120, the left wall 130, the right wall 140 and the rear wall 150 may define the upper surface, lower surface, left surface, right surface and rear surface of the main body 100, respectively.

The storerooms 11, 12 and 13 may accommodate items. The storerooms 11, 12 and 13 may be formed to have open front to put in or take out the items. The main body 100 may include a horizontal partition wall 160 that divides a first storeroom 11 from a second storeroom 12 and a third storeroom 13, and a vertical partition wall 161 that divides the second storeroom 12 from the third storeroom 13. The first storeroom 11 may be arranged in an upper portion of the main body 100, and the second storeroom 12 and the third storeroom 13 may be arranged in a lower portion of the main body 100. The first storeroom 11 may be a fridge chamber; the second storeroom 12 may be a freezer chamber; the third storeroom 13 may be a temperature-changing chamber.

The doors 21, 22, 23 and 24 may open or close the storerooms 11, 12 and 13. The first door 21 and the second door 22 may open or close the first storeroom 11, the third door 23 may open or close the second storeroom 12, and the fourth door 24 may open or close the third storeroom 13. The doors 21, 22, 22 and 24 may be rotationally coupled to the main body 100.

The doors 21, 22, 22 and 24 may be rotationally coupled to the main body 100 by hinges. For example, the first door 21 and the second door 22 may be rotationally coupled to the main body 100 by hinges 31 arranged at the top of the main body 100 and hinges arranged in the middle of the main body 100. The hinge 31 may include a hinge pin that vertically protrudes to form a rotation shaft of the door. The hinge 31 may be covered by a top cover 300 arranged to cover the top front portion of the main body 100.

A rotation bar 40 may be arranged at one of the first door 21 and the second door 22 to cover a gap formed between the first door 21 and the second door 22 while the first door 21 and the second door 22 are closed. The rotation bar 40 may be rotationally arranged at one of the first door 21 and the second door 22. The rotation bar 40 may have the shape of a bar formed to be long in the vertical direction. The rotation bar 40 may also be referred to as a pillar or a mullion.

A guide projection 46 may be arranged at the top of the rotation bar 40, and a rotation guide 119 for guiding rotation of the guide projection 46 may be arranged at the top of the main body 100.

The doors 21, 22, 23 and 24 may include gaskets 51. The gaskets 51 may closely come into contact with the front surface of the main body 100 while the doors 21, 22, 23 and 24 are closed. The doors 21, 22, 23 and 24 may include dikes 52 that protrude rearward. Door racks 53 may be mounted on the dike 52 to store items. The rotation bar 40 may be rotationally installed at the dike 52.

Although the number and layout of storerooms and the number and layout of doors were described above, there are no limitations on the number and layout of storerooms and the number and layout of doors of the refrigerator according to an embodiment of the disclosure.

The refrigerator 1 may include a thermoelectric cooling device 400 arranged to cool the storeroom 11.

The thermoelectric cooling device 400 may be arranged above the storeroom 11 to cool the storeroom 11. Specifically, the thermoelectric cooling device 400 may be arranged at the upper wall 110 of the main body 100.

The thermoelectric cooling device 400 may include a thermoelectric element 530. The thermoelectric element 530 may be a semiconductor device that uses the thermoelectric effect to convert thermal energy to electric energy and vice versa, and may also be referred to as a thermoelectric device, a Peltier element, etc.

The thermoelectric element 530 includes a heater 531 and a cooler 532. When a current is applied to the thermoelectric element 530, a heat radiation action may occur in the heater 531 and a heat absorption action may occur in the cooler 532. The thermoelectric element 530 may be shaped like a thin hexahedron. The heater 531 may be arranged on one side of the thermoelectric element 530 and the cooler 532 may be arranged on the other side.

The thermoelectric element 530 may be arranged such that the heater 531 is directed upward of the thermoelectric element 530 and the cooler 532 is directed downward of the thermoelectric element 530. In other words, the heater 531 may face outside of the main body 100 and the cooler 532 may face the inside of the storeroom 11. Accordingly, the air heated by exchanging heat with the heater 531 may be discharged out of the main body 100 and the air cooled by exchanging heat with the cooler 532 may be supplied into the storeroom 11.

The thermoelectric cooling device 400 may include a heat radiation sink 520 that comes into contact with the heater 531 to efficiently perform heat exchange between the heater 531 and the air outside the main body 100.

The heat radiation sink 520 may be located outside the main body 100. The heat radiation sink 520 may come into contact with the heater 531 to absorb heat from the heater 531 and emit heat to the outside of the main body 100. The heat radiation sink 520 may also be referred to as a hot sink, a heat sink for heat dissipation, a hot heat sink, etc.

The heat radiation sink 520 may be formed of a metal with high heat conductivity. For example, the heat radiation sink 520 may be formed of aluminum or copper.

The heat radiation sink 520 may include a heat radiation sink base 521 that comes into contact with the heater 531, and a plurality of heat radiation pins 525 protruding from the heat radiation sink base 521 to expand the heating surface. The plurality of heat sink pins 525 may protrude upward from the heat radiation sink base 521.

The thermoelectric cooling device 400 may include a cooling sink 570 that comes into contact with the cooler 532 to efficiently perform heat exchange between the cooler 532 and the air inside the storeroom 11.

The cooling sink 570 may be located in the storeroom 11. The cooling sink 570 may cool the storeroom 11 by taking heat from the storeroom 11 and transferring the heat to the cooler 532. The cooling sink 570 may also be referred to as a cold sink, a refrigeration sink, a cold heat sink, a cooling heat sink, etc.

The cooling sink 570 may be formed of a metal with high heat conductivity. For example, the cooling sink 570 may be formed of aluminum or copper.

The cooling sink 570 may include a cooling sink base 571 that comes into contact with the cooler 532, and a plurality of cooling pins 575 protruding from the cooling sink base 571 to expand the heating surface. The plurality of cooling pins 525 may protrude downward from the cooling sink base 571. The cooling sink base 571 and the plurality of cooling pins 575 may be integrally formed.

The thermoelectric cooling device 400 may include a heat radiation fan 600 that forces air to move to efficiently perform heat exchange between the heat radiation sink 520 and the air outside the main body 100.

The heat radiation fan 600 may be arranged to blow air to the heat radiation sink 520. The heat radiation fan 600 may be located in a horizontal direction of the heat radiation sink 520. The heat radiation fan 600 may be arranged outside the main body 100. The heat radiation fan 600 may be arranged on the top of the upper wall 110.

The heat radiation fan 600 may be a centrifugal fan that draws air in the axial direction and discharges the air in the radial direction. The centrifugal fan may include a blower fan. A rotation shaft 610 of the heat radiation fan 600 may be arranged to be perpendicular to the top surface of the upper wall 110.

The thermoelectric cooling device 400 may include a heat radiation duct 700 arranged to guide the air moving by the heat radiation fan 600. The heat radiation duct 700 may draw in air from outside the main body 100 and guide the air to exchange heat with the heat radiation sink 520, and discharge the air that has exchanged heat with the heat radiation sink 520 back to the outside of the main body 100.

The heat radiation duct 700 may draw in air from an outer space above the main body 100. The heat radiation duct 700 may discharge the air that has exchanged heat with the heat radiation sink 520 to the outer space above the main body 100. The heat radiation fan 600 may be located in the heat radiation duct 700. The heat radiation sink 520 may be located in the heat radiation duct 700. The heat radiation duct 700 may be arranged on the top surface of the upper wall 110.

The heat radiation duct 700 may include an outside air intake port 751 through which to draw in air from outside the main body 100 into the heat radiation duct 700, and an outside air discharge port 782 through which to discharge the air that has exchanged heat with the heat radiation sink 520 to the outside of the main body 100.

The thermoelectric cooling device 400 may include a cooling fan 800 that forces air to move to efficiently perform heat exchange between the cooling sink 570 and the air inside the storeroom 11.

The cooling fan 800 may be arranged to blow air to the cooling sink 570. The cooling fan 800 may be located in a horizontal direction of the cooling sink 570. The cooling fan 800 may be arranged in the storeroom 11. The cooling fan 800 may be arranged underneath the upper wall 110.

The cooling fan 800 may be a centrifugal fan that draws air in the axial direction and discharges the air in the radial direction. A rotation shaft 810 of the cooling fan 800 may be arranged to be perpendicular to the bottom surface of the upper wall 110.

The thermoelectric cooling device 400 may include a cooling duct 900 arranged to guide the air moving by the cooling fan 800. The cooling duct 700 may draw in air from inside the storeroom 11 and guide the air to exchange heat with the cooling sink 570, and discharge the air that has exchanged heat with the cooling sink 570 back into the storeroom 11.

The cooling fan 800 may be located in the cooling duct 900. The cooling sink 570 may be located in the cooling duct 900. The cooling duct 900 may be arranged underneath the upper wall 110.

The cooling duct 900 may include an inside air intake port 991 through which to draw in air from inside the storeroom 11 into the cooling duct 900, and an inside air discharge port 992 through which to discharge the air that has exchanged heat with the cooling sink 570 into the storeroom 11.

Referring to FIG. 4, the refrigerator 1 may include a refrigeration cycle device to cool the storeroom through a refrigeration cycle. The refrigeration cycle device may include a compressor 2, a condenser (not shown), an expansion valve (not shown) and an evaporator 3. The evaporator 3 may be arranged beside the storerooms 12 and 13.

The refrigerator 1 may include evaporator ducts 60 and 70 that guide cold air produced from the evaporator 3. The first evaporator duct 60 may be arranged behind the second storeroom 12 and the third storeroom 13. The second evaporator duct 70 may be arranged behind the first storeroom 11.

The cold air produced from the evaporator 3 may be drawn into the first evaporator duct 60 by the evaporator fan 80. The cold air drawn into the first evaporator duct 60 may be discharged into the second storeroom 12 or the third storeroom 13 through a cold air outlet (not shown) formed on the front. Furthermore, the cold air drawn into the first evaporator duct 60 may be guided into an internal flow path 78 of the second evaporator duct 70. A damper 61 may be arranged in the first evaporator duct 60 to control the cold air in the first evaporator duct 60 to be supplied into the second evaporator duct 70. A connection duct 90 may be arranged between the first evaporator duct 60 and the second evaporator duct 70 to connect the first evaporator duct 60 to the second evaporator duct 70.

The cold air brought into the internal flow path 78 of the second evaporator duct 70 may be supplied into the first storeroom 11 through a cold air outlet 72 formed on the front of the second evaporator duct 70.

The damper 61 may open or close the internal flow path 78.

When the internal flow path 78 is opened by the damper 61, the cold air produced from the evaporator 3 may be guided into the first storeroom 11.

When the internal flow path 78 is closed by the damper 61, the cold air produced from the evaporator 3 may be blocked by the damper 61 and may not be guided into the first storeroom 11.

The cold air brought into the internal flow path 78 of the second evaporator duct 70 may be supplied into the first storeroom 11 through the cold air outlet 72 formed on the front of the second evaporator duct 70.

However, unlike the aforementioned embodiment, the cold air produced from the evaporator 3 may be supplied directly into the second evaporator duct 70 without passing through the first evaporator duct 60. Furthermore, the separate evaporator 3 may be arranged behind the first storeroom 11 to supply cold air into the second evaporator duct 70.

As such, as the refrigerator 1 according to an embodiment of the disclosure includes the thermoelectric cooling device 400 and the refrigeration cycle device for cooling the storeroom 11, the method of supplying cold air into the storeroom 11 may include a first method of supplying cold air produced only by the thermoelectric cooling device 400, a second method of supplying cold air produced only by the refrigeration cycle device, and a third method of supplying cold air produced by both the thermoelectric cooling device 400 and the refrigeration cycle device.

The refrigerator 1 may supply cold air into the storeroom 11 in a proper method according to external and internal conditions. For example, the refrigerator 1 may cool the storeroom 1 in one of the methods according to the temperature of a room where the refrigerator 1 is installed. Specifically, when the room temperature is higher than a predetermined temperature, so cooling by the refrigeration cycle has higher efficiency than by thermoelectric cooling device 400, the storeroom 11 may be cooled by the cold air produced only by the refrigeration cycle device. On the other hand, when the room temperature is lower than the predetermined temperature, so cooling by the thermoelectric cooling device 400 has higher efficiency than by the refrigeration cycle device, the storeroom 11 may be cooled by the cold air produced only by the thermoelectric cooling device 400. The refrigerator 1 may operate only the thermoelectric cooling device 400 when there is a need to reduce noise. The refrigerator 1 may supply cold air produced by the thermoelectric cooling device 400 and cold air produced by the refrigeration cycle device into the storeroom 11 at the same time when the storeroom 11 needs to be cooled rapidly.

As described above, the refrigerator 1 according to an embodiment of the disclosure may include the thermoelectric cooling device 400 and the refrigeration cycle device, but is not limited thereto and the refrigerator may include only the thermoelectric cooling device 400.

Although the thermoelectric cooling device 400 was described as being arranged at the upper wall 110 of the main body 100, the location of the thermoelectric cooling device 400 is not limited thereto.

In various embodiments, the thermoelectric cooling device 400 may be arranged at at least one of the upper wall 110, the lower wall 120, the left wall 130, the right wall 140 and the rear wall 150.

The refrigerator 1 may include a first speed sensor 111 and/or a second speed sensor 112.

The first speed sensor 111 may be arranged in the heat radiation duct 700. The first speed sensor 111 may detect rotation speed of the heat radiation fan 600.

The second speed sensor 112 may be arranged in the cooling duct 900. The second speed sensor 112 may detect rotation speed of the cooling fan 800.

The refrigerator 1 may include a first temperature sensor 113 and/or a second temperature sensor 114.

The first temperature sensor 113 may detect the temperature of the heater 531.

The second temperature sensor 114 may detect the temperature of the cooler 532.

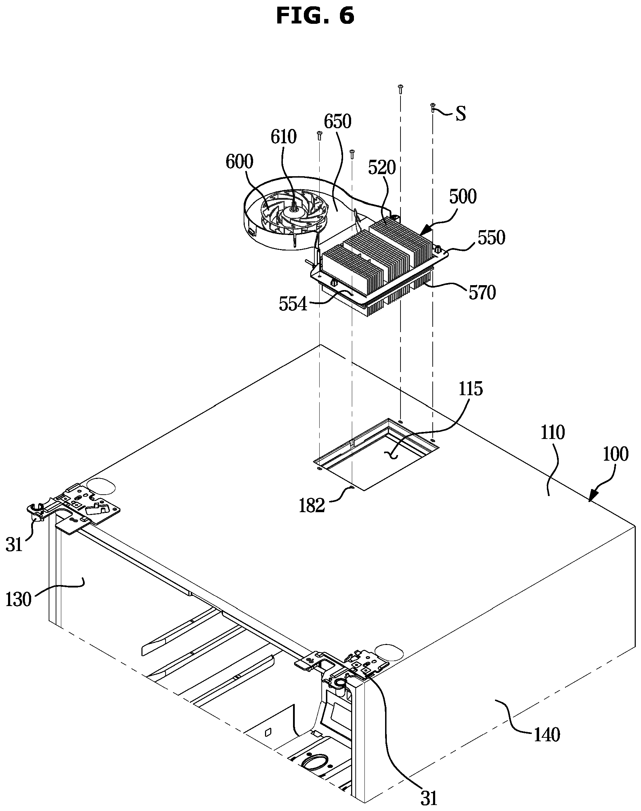

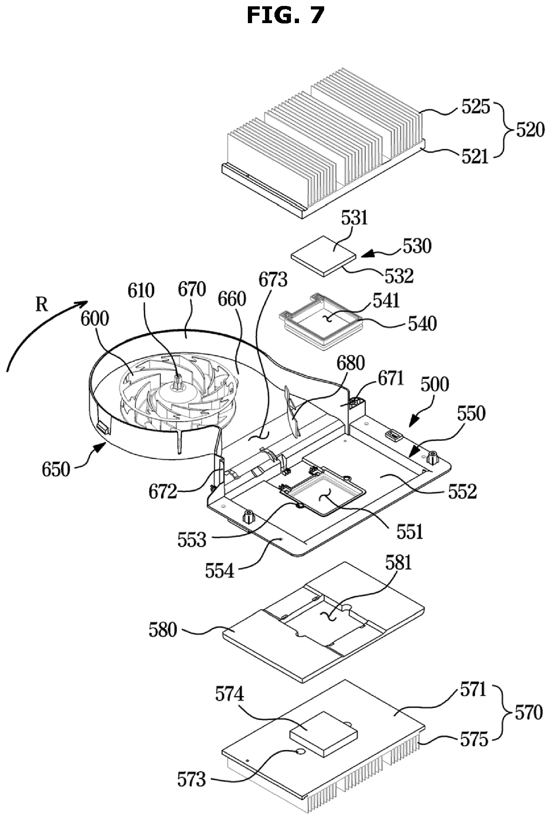

FIG. 6 is a perspective view illustrating a coupling structure between a thermoelectric module and an upper wall of a refrigerator, according to an embodiment of the disclosure. FIG. 7 is an exploded view of a heat radiation fan and a thermoelectric module, according to an embodiment of the disclosure.

The thermoelectric element 530, the heat radiation sink 520 and the cooling sink 570 among the components of the thermoelectric cooling device may be assembled integrally into a thermoelectric module.

A through hole 115 may be formed at the upper wall 110 of the refrigerator 1, and the thermoelectric module may be arranged in the through hole 115.

The thermoelectric module may include the thermoelectric element 530 having the heater 531 and the cooler 532, the heat radiation sink 520 that comes into contact with the heater 531 of the thermoelectric element 530, the cooling sink 570 that comes into contact with the cooler 532 of the thermoelectric element 530, and a module plate 550 on which the thermoelectric element 530, the heat radiation sink 520 and the cooling sink 570 are installed.

The module plate 550 may serve as a frame of the thermoelectric module. The module plate 550 may be formed of a resin material with low heat conductivity. The module plate 550 may support the heat radiation sink 520 and the cooling sink 570. The module plate 550 may keep a distance between the heat radiation sink 520 and the cooling sink 570, and support the heat radiation sink 520 and the cooling sink 570. As shown in the drawings, the module plate 550 may be integrally formed with a fan case 650 which will be described later. However, it is also possible that the module plate 550 is arranged separately from the fan case 650.

The module plate 550 may include a module plate opening 551. The thermoelectric element 530 may be arranged inside the module plate opening 551. The vertical length of the module plate opening 551 may be larger than the vertical length of the thermoelectric element 530, and the thermoelectric element 530 may be arranged on the top of the module plate opening 551. The reason why the thermoelectric element 530 is arranged on the top of the inside of the module plate opening 551 is that an amount of heat radiation of the thermoelectric element 530 is larger than an amount of heat absorption, that the thermoelectric element 530 being located on the top of the module plate opening 551 is advantageous to heat radiation of the heater 531 and that overall operation efficiency of the thermoelectric element 530 may increase.

As the thermoelectric element 530 is arranged on the top of the module plate opening 551, the cooling sink 570 may include a cooling conductor 574 that protrudes from the cooling sink base 571 to come into contact with the cooler 532 of the thermoelectric element 530. The cooling conductor 574 may be inserted to the module plate opening 551 to come into contact with the cooler 532 of the thermoelectric element 530.

The thermoelectric module may include an element insulator 540 that insulates the module plate 550 from the thermoelectric element 530. The element insulator 540 may be arranged on the module plate opening 551 to prevent the thermoelectric element 530 from contacting the module plate 550. The element insulator 540 may be arranged to surround the sides of the thermoelectric element 530. The element insulator 540 may include an element insulator opening 541 so that the thermoelectric element 530 may be accommodated in the element insulator opening 541. The cooling conductor 574 of the cooling sink 570 may be accommodated in the element insulator opening 541.

The module plate 550 may include a heat radiation sink support 552 for supporting the heat radiation sink 520. The heat radiation sink support 552 may support by coming into contact with the bottom surface of the heat radiation sink base 521.

The heat radiation module may include a sink insulator 580 arranged between the module plate 550 and the cooling sink 570. The sink insulator 580 may prevent heat transfer between the heat radiation sink 520 and the cooling sink 570 through the module plate 550. The sink insulator 580 may include a sink insulator opening 581 for the opening 551 of the module plate 550 to pass through.

The sink insulator 580 may support the top of the cooling sink 570. However, the sink insulator 580 may be omitted, and in this case, the heat radiation sink 520 may be supported on the top of the module plate 550 and the cooling sink 570 may be supported on the bottom of the module plate 550.

The heat radiation sink 520 may include the heat radiation sink base 521 and the plurality of heat radiation pins 525 protruding from the heat radiation sink base 521. The bottom of the heat radiation sink base 521 may be supported on the module plate 550. The bottom of the heat radiation sink base 521 may contact the heater 531 of the thermoelectric element 530.

The plurality of heat sink pins 525 may protrude from the top of the heat radiation sink base 521.

The cooling sink 570 may include the cooling sink base 571, and the plurality of cooling pins 575 protruding from the cooling sink base 571. The top of the cooling sink base 571 may be supported by the sink insulator 580. The cooling sink 570 may include the cooling conductor 574 that protrudes from the top of the cooling sink base 571 to come into contact with the cooler 532 of the thermoelectric element 530. The cooling conductor 574 may be formed integrally with the cooling sink base 571.

The plurality of cooling pins 575 may protrude from the bottom 572 of the cooling sink base 571.

The heater 531 of the thermoelectric element 530 may be fixed by being supported by the heat radiation sink 520; the cooler 532 of the thermoelectric element 530 may be fixed by being supported by the cooling sink 570; the side that connects the heater 531 and the cooler 532 of the thermoelectric element 530 may be fixed by being supported by inner sides of the element insulator 540.

The refrigerator 1 may include the fan case 650 in which the heat radiation fan 600 is installed to guide air blown by the heat radiation fan 600. The fan case 650 may be formed integrally with or separately from the aforementioned module plate 550.

The fan case 650 may include a case bottom 660 on which the heat radiation fan 600 is rotationally installed, and a case scroll 670 extending upward from edges of the case bottom 660 to guide air blown from the heat radiation fan 600 toward the heat radiation sink 520. The heat radiation fan 600 may be a centrifugal fan, which may be installed to be perpendicular to the case bottom 660.

The case scroll 670 may be formed to surround the heat radiation fan 600 in the radial direction of the heat radiation fan 600 and have a scroll opening 673 open to the heat radiation sink 520. The case scroll 670 may include one end 671 in a rotation direction R of the heat radiation fan 600 and the other end 672 opposite the one end. The one end 671 and the other end 672 may be separated from each other, and the scroll opening 673 may be formed between the one end 671 and the other end 672.

The air blown from the heat radiation fan 600 may be discharged in the radial direction of the heat radiation fan 600 and moved to the heat radiation sink 520 along inner sides of the case scroll 670. More air may be moved from the heat radiation fan 600 toward the one end 671 of the case scroll 670 than toward the other end 672 of the case scroll 670.

The fan case 650 may include a case guide 680 extending upward from the case bottom 660 to guide the air moving toward the one end 671 of the case scroll 670 from the heat radiation fan 600 to a different direction. The case guide 680 may be spaced from the case scroll 670. The case guide 680 may guide the air moving toward the one end 671 of the case scroll 670 to the other end 672 of the case scroll 670 or to the center of the case opening 673. Accordingly, the air blown from the heat radiation fan 600 may be uniformly distributed by the case guide 680 to heat radiation channels 528 of the heat radiation sink 520, and the heat exchange efficiency of the heat radiation sink 620 may increase.

Symbol S in FIG. 6 denotes coupling members S to couple the thermoelectric module to the upper wall 110.

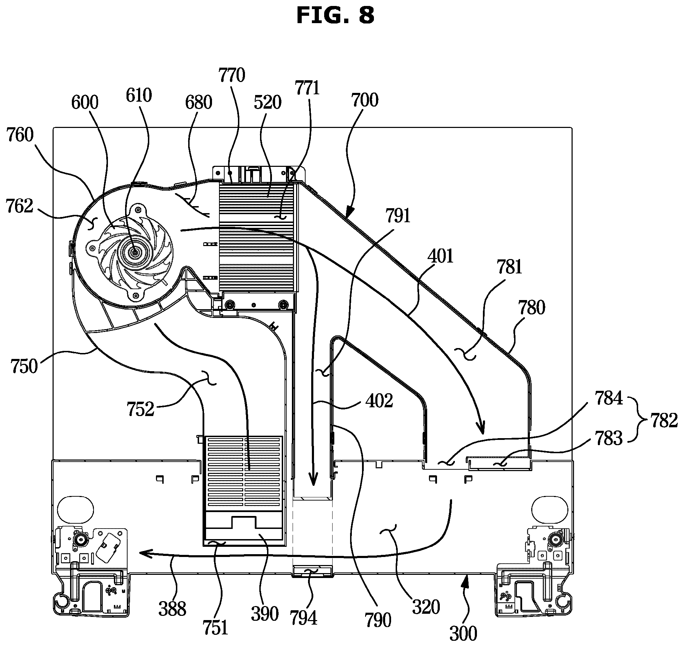

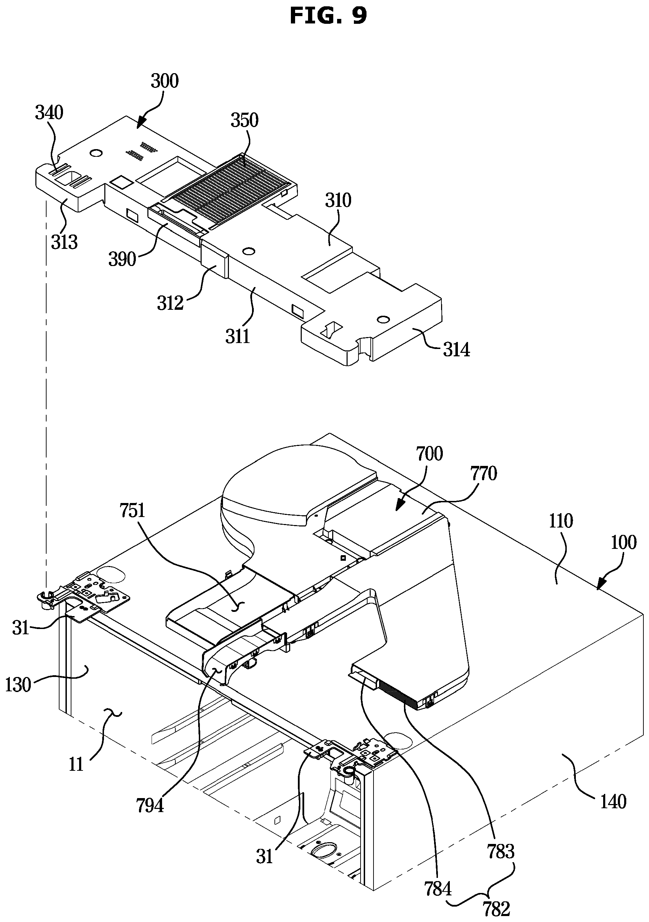

FIG. 8 illustrates a first heat radiation path, a second heat radiation path and a circulation path, according to an embodiment of the disclosure. FIG. 9 illustrates a top cover and a heat radiation duct, according to an embodiment of the disclosure.

As described above, the refrigerator 1 may include the heat radiation duct 700 arranged at the upper wall 110 to draw in air from outside of the main body to exchange heat with the heat radiation sink 520 and discharge the air that has warmed after the heat exchange with the heat radiation sink 520 back to the outside of the main body.

The heat radiation duct 700 may include the outside air intake port 751 arranged to draw in air from outside the main body, and outside air discharge ports 782 and 794 through which to discharge the air that has warmed after exchanging heat with the heat radiation sink 520 to the outside of the main body. The outside air intake port 751 may be formed on the top of the heat radiation duct 700. At the outside air intake port 751, a filter 390 may be arranged to prevent foreign materials from coming into the heat radiation duct 700 through the outside air intake port 751. The filter 390 may be detachably arranged at the outside air intake port 751.

The heat radiation duct 700 may include a fan receiver 760 for accommodating the heat radiation fan 600, and a sink receiver 770 for accommodating the heat radiation sink 520. The heat radiation duct 700 may include an intake duct part 750 arranged upstream of the fan receiver 760 to guide the air drawn in through the outside air intake port 751 to the fan receiver 760. The heat radiation duct 700 may include discharge duct parts 780 and 790 arranged downstream of the sink receiver 770 to guide air that has warmed after exchanging heat with the heat radiation sink 520.

The discharge duct parts 780 and 790 may include a first discharge duct part 780 for guiding the air that has warmed after exchanging heat with the heat radiation sink 520 to be discharged out of the main body 100, and a second discharge duct part 790 branched from the first discharge duct part 780 for guiding the air that has warmed after exchanging heat with the heat radiation sink 520 to be discharged toward the rotation bar 40. The first outside air discharge port 782 may be formed at the first discharge duct part 780, and the second outside air discharge port 794 may be formed at the second discharge duct part 790.

A fan receiving space 762 may be formed on the bottom of the fan receiver 760 to accommodate the heat radiation fan 600. A sink receiving space 771 may be formed on the bottom of the sink receiver 770 to accommodate the heat radiation sink 520. An intake space 752 may be formed in the intake duct part 750 to guide the air drawn in through the outside air intake port 751 to the fan receiving space 762.

When air is brought in from outside of the main body 100 through the outside air intake port 751, the filter 390 arranged at the external intake port 751 may filter off foreign materials. The filter may be clogged by the foreign materials while filtering the foreign materials. The clogging of the filter 390 may include preventing the filtering due to the foreign materials. Furthermore, the clogging of the filter 390 may include a decrease in filtering efficiency due to the foreign materials.

In the case that the filter 390 is clogged, when the amount of air moving in the heat radiation duct 700 becomes smaller and air resistance decreases, the rotation speed of the heat radiation fan 600 operated at certain power may increase more than in the case that the filter 390 is not clogged.

When the filter 390 is clogged, causing air not to be properly brought in from outside of the main body 100, the air brought in from outside of the main body 100 may not be efficiently discharged through the discharge duct parts 780 and 790 even when the heat radiation fan 600 is rotated. This may lead to a failure to normally lower the heat produced from the heater 531 and thus to a decrease in operation efficiency of the thermoelectric element 530.

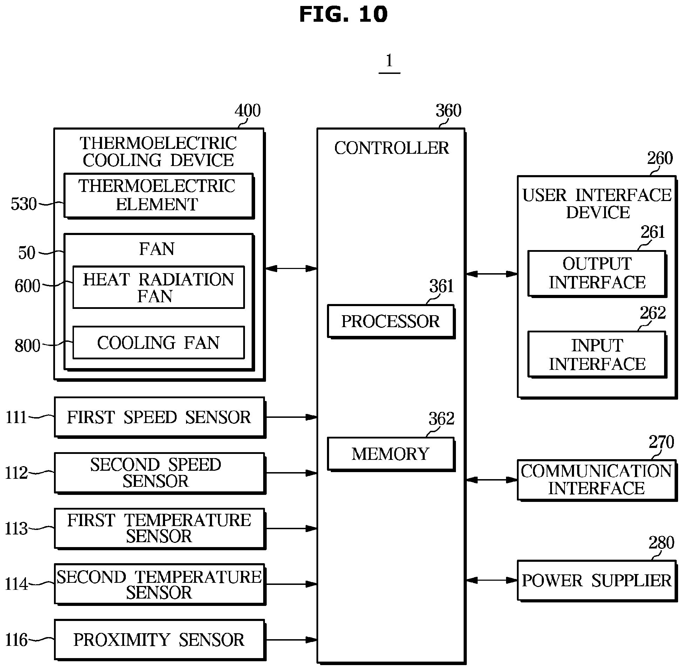

Hence, the filter 390 needs to be periodically cleaned or replaced when the filter 390 is clogged, but ordinary users are often unable to know of the cleaning or replacement cycle of the filter 390. There is a need to notify whether the filter 390 is clogged to induce the user to clean or replace the filter 390 to increase the operation efficiency of the thermoelectric element 530. For this, an embodiment according to the disclosure for determining and notifying whether the filter 390 is clogged will be described later in connection with FIGS. 10 to 18.

A first discharge space 781 may be formed in the first discharge duct part 780 to guide air that has warmed after exchanging heat with the heat radiation sink 520 to the first outside air discharge port 782. A second discharge space 791 may be formed in the second discharge duct part 790 to guide air that has warmed after exchanging heat with the heat radiation sink 520 to the second outside air discharge port 794.

From another perspective, the heat radiation duct 700 may include a heat radiation duct body 710, a heat radiation duct cover 720 and an extension duct 740. In other words, the heat radiation duct body 710, the heat radiation duct cover 720 and the extension duct 740 may be combined to form the heat radiation duct 700. The heat radiation duct cover 720 may be coupled to the top of the heat radiation duct body 710. The extension duct 740 may be arranged in front of the heat radiation duct body 710 to be arranged under the top cover 300. The extension duct 740 may be arranged separately from or integrally with the heat radiation duct body 710. The extension duct 740 may be coupled to a lower portion of the top cover 300. The second outside air discharge port 794 may be formed between the extension duct 740 and the top cover 300.

As described above, the refrigerator 1 may include a top cover 300 coupled to a top front portion of the main body 100 to cover the plurality of hinges 31. The top cover 300 may include a top cover upper part 310, a top cover side part 311 extending downward from edges of the top cover upper part 310, and a top cover internal space 320 formed by the top cover upper part 310 and the top cover side part 311.

The aforementioned filter 390 may be mounted at the top cover 300. Specifically, the filter 390 may be mounted at the top cover 300 to be arranged on the outside air intake part 751 formed on the top of the heat radiation duct 700. The top cover 300 may include an intake grill 350 formed on top of the outside air intake port 751. Accordingly, coarse foreign materials may be primarily filtered off by the intake grill 350 from the air brought into the heat radiation duct 700 through the outside air intake port 751, and fine foreign materials may be secondarily filtered off by the filter 390.

The top cover 300 may include an extension duct coupler 380 coupled to the extension duct 740. The top cover 300 may include a discharge port former 312 arranged on the front of the top cover 300 to form the second outside air discharge port 794 along with the extension duct 740.

At least a portion of the air discharged from the heat radiation duct 700 through the first outside air discharge port 782 may flow into the top cover internal space 320. In other words, the air that has warmed after exchanging heat with the heat radiation sink 520 may flow into the top cover internal space 320. For this, a top cover inlet 330 may be formed at the top cover 300.

The first outside air discharge port 782 may include a circulation discharge port 784 connected to the top cover inlet 330 to guide the air of the heat radiation duct 700 into the top cover internal space 320. The first outside air discharge port 782 may include an external discharge port 783 divided from the circulation discharge port 784 to discharge the air of the heat radiation duct 700 to the outside of the top cover 300.

The warm air brought into the top cover internal space 320 may circulate in the top cover internal space 320 and may be discharged out of the top cover 300. For this, the top cover 300 may include a top cover outlet 340. The warm air circulating in the top cover internal space 320 may heat the top of the main body 100. This may prevent condensation on the top surface of the main body 100.

The top cover 300 may include a discharge guide 381 formed to guide the air discharged out of the heat radiation duct 700 through the external discharge port 783 of the first outside air discharge port 782. The discharge guide 381 may include a slope to guide the air discharged through the external discharge port 783 to be smoothly discharged without being interfered by the top cover 300.

With the structure of the heat radiation duct 700 and the top cover 300, the refrigerator 1 may include a first heat radiation path 401 through which the air that has warmed after passing through the heat radiation sink 520 is discharged out of the main body 100, and a second heat radiation path 402 branched from the first heat radiation path 401 to allow the air that has warmed after passing through the heat radiation sink 520 to be discharged toward the rotation bar 40. As the warm air after exchanging heat with the heat radiation sink 520 is discharged toward the rotation bar 40 through the second heat radiation path 402, condensation on the rotation bar 40 may be prevented.

The refrigerator 1 may include a circulation path 388, through which the air discharged through the first heat radiation path 401 is brought into the top cover 300, circulating in the top cover 300, and discharged out of the top cover 300. As the warm air after exchanging heat with the heat radiation sink 520 circulates in the top cover 300 through the circulation path 388, condensation on the top of the main body 100 may be prevented.

FIG. 10 is a control block diagram of a refrigerator, according to an embodiment of the disclosure.

Referring to FIG. 10, the refrigerator 1 may include the thermoelectric cooling device 400, the first speed sensor 111, the second speed sensor 112, the first temperature sensor 113, the second temperature sensor 114, a proximity sensor 116, a power supplier 280, the user interface device 260, a communication interface 270 and/or a controller 360.

The thermoelectric cooling device 400 may include the thermoelectric element 530 and/or a fan 50.

When supplied with power, the thermoelectric element 530 may allow heat exchange between the cooling sink and the heat radiation sink. For example, the thermoelectric element 530 may convert electric energy to thermal energy so that heat radiation action occurs in the heater 531 and heat absorption action occurs in the cooler 532.

When the heat radiation occurs in the heater 531, the air that has warmed by the heat radiation sink 520 that contacts the heater 531 may be discharged out of the main body 100 and the air that has cooled by the cooling sink 570 that contacts the cooler 532 may be supplied into the first storeroom 11.

The controller 360 may control the thermoelectric element 530. The controlling of the thermoelectric element 530 may include controlling the thermoelectric element 530 to be turned on/off. The controlling of the thermoelectric element 530 may include controlling the power supplier 280 to supply power to the thermoelectric element 530.

The power supplier 280 may supply power to the thermoelectric element 530. The power supplier 280 supplying power to the thermoelectric element 530 may include applying a certain current and/or voltage to the thermoelectric element 530.

When the certain current and/or voltage is applied to the thermoelectric element 530, the heat radiation sink 520 may come into contact with the heater 531 to absorb heat from the heater 531 and emit the heat out of the main body 100.

When the certain current and/or voltage is applied to the thermoelectric element 530, the cooling sink 570 may take heat from the first storeroom 11 and transfer the heat to the cooler 532, thereby cooling the first storeroom 11.

The fan 50 may include the heat radiation fan 600 and/or the cooling fan 800.

The heat radiation fan 600 may be rotated according to the power supplied from the power supplier 280.

The heat radiation fan 600 may be rotated by a heat radiation fan motor that receives power from the power supplier 280.

The heat radiation fan motor may include a BLDC motor, a PMSM motor and/or a DC motor.

The heat radiation fan 600 may rotate to draw in air from outside the main body 100 and guide the air to exchange heat with the heat radiation sink 520, and discharge the air that has exchanged heat with the heat radiation sink 520 back to the outside of the main body 100.

The controller 360 may control the heat radiation fan 600. The controlling of the heat radiation fan 600 may include operating the heat radiation fan 600 to rotate the heat radiation fan 600. The operating of the heat radiation fan 600 may include supplying power to the heat radiation fan motor to rotate the heat radiation fan 600.

The controlling of the heat radiation fan 600 may include stopping the rotation of the heat radiation fan 600. The stopping of the rotation of the heat radiation fan 600 may include stopping the rotation of the heat radiation fan 600 by not supplying power to the heat radiation fan motor.

In an embodiment, the controller 360 may control the heat radiation fan 600 at multiple heat radiation levels. The controlling of the heat radiation fan 600 at multiple heat radiation levels may include operating the heat radiation fan 600 at multiple heat radiation levels. The operating of the heat radiation fan 600 at multiple heat radiation levels may include operating the heat radiation fan motor at multiple heat radiation levels.

The multiple heat radiation levels may include the first heat radiation level, the second heat radiation level and/or the third heat radiation level. The first heat radiation level may include a first preset voltage. The second heat radiation level may include a second preset voltage, and the third heat radiation level may include a third preset voltage. The third preset voltage may be higher than the second preset voltage. The second preset voltage may be higher than the first preset voltage.

The operating of the heat radiation fan motor at multiple heat radiation levels may include operating the heat radiation fan motor at the first level, operating the heat radiation fan motor at the second level, and operating the heat radiation fan motor at the third level.

The operating of the heat radiation fan motor at the first level may include applying the first preset voltage to the heat radiation fan motor. The operating of the heat radiation fan motor at the second level may include applying the second preset voltage to the heat radiation fan motor. The operating of the heat radiation fan motor at the third level may include applying the third preset voltage to the heat radiation fan motor.

In the disclosure, the multiple heat radiation levels are not limited thereto, and the number of heat radiation levels may vary in various embodiments. For example, the number of the multiple heat radiation levels may be more than or less than three.

As the air that has exchanged heat with the heat radiation sink 520 is moved with the operation of the heat radiation fan 600, the heat radiation sink 520 may radiate heat fast. With the rapid heat radiation of the heat radiation sink 520, heat radiation action in the heater 531 and heat absorption action in the cooler 532 may occur smoothly.

The cooling fan 800 may be rotated according to the power supplied from the power supplier 280.

The cooling fan 800 may be rotated by a cooling fan motor that receives power from the power supplier 280.

The cooling fan motor may include a BLDC motor, a PMSM motor and/or a DC motor.

As the cooling fan 800 is rotated and the air that has exchanged heat with the cooling sink 570 is moved around, the inside of the first storeroom 11 may be cooled fast. With the movement of the air that has exchanged heat with the cooling sink 570, heat radiation action in the heater 531 and heat absorption action in the cooler 532 may occur smoothly.

The controller 360 may control the cooling fan 800. The controlling of the cooling fan 800 may include operating the cooling fan 800 to rotate the cooling fan 800. The operating of the cooling fan 800 may include supplying power to the cooling fan motor to rotate the cooling fan 800.

The controlling of the cooling fan 800 may include stopping the rotation of the cooling fan 800. The stopping of the rotation of the cooling fan 800 may include stopping the rotation of the cooling fan 800 by not supplying power to the cooling fan motor.

In an embodiment, the controller 360 may control the cooling fan 800 at multiple cooling levels. The controlling of the cooling fan 800 at multiple cooling levels may include operating the cooling fan 800 at multiple cooling levels. The operating of the cooling fan 800 at multiple cooling levels may include operating the cooling fan motor at multiple cooling levels.

The multiple cooling levels may include the first cooling level, the second cooling level and/or the third cooling level. The first cooling level may include a first preset voltage. The second cooling level may include a second preset voltage, and the third cooling level may include a third preset voltage. The third preset voltage may be higher than the second preset voltage. The second preset voltage may be higher than the first preset voltage.

The operating of the cooling fan motor at multiple cooling levels may include operating the cooling fan motor at the first level, operating the cooling fan motor at the second level, and operating the cooling fan motor at the third level.

The operating of the cooling fan motor at the first level may include applying the first preset voltage to the cooling fan motor. The operating of the cooling fan motor at the second level may include applying the second preset voltage to the cooling fan motor. The operating of the cooling fan motor at the third level may include applying the third preset voltage to the cooling fan motor.

In the disclosure, the multiple cooling levels are not limited thereto, and the number of cooling levels may vary in various embodiments. For example, the number of multiple cooling levels may be more than or less than three.

The first speed sensor 111 may detect rotation speed of the heat radiation fan 600. The first speed sensor 111 may detect the rotation speed of the heat radiation fan 600 by counting the electric signal that occurs each time the heat radiation fan 600 is rotated. The first speed sensor 111 may send information about the rotation speed of the heat radiation fan 600 to the controller 360.

The second speed sensor 112 may detect rotation speed of the cooling fan 800. The second speed sensor 112 may detect the rotation speed of the cooling fan 800 by counting the electric signal that occurs each time the cooling fan 800 is rotated. The second speed sensor 112 may send information about the rotation speed of the cooling fan 800 to the controller 360.

The first temperature sensor 113 may detect temperature of the heater 531. The first temperature sensor 113 may send information about the temperature of the heater 531 to the controller 360.

The second temperature sensor 114 may detect temperature of the cooler 532. The second temperature sensor 114 may send information about the temperature of the cooler 532 to the controller 360.

The proximity sensor 116 may detect an object outside the refrigerator 1. For example, the proximity sensor 116 may detect a location of an object (e.g., the user) within a certain range from the main body. The proximity sensor 116 may send information about the object outside the refrigerator 1 to the controller 360.

The power supplier 280 may supply power to various components of the refrigerator 1. For example, the power supplier 280 may supply power to the various components of the refrigerator 1 based on a signal to power on the refrigerator 1. The signal to power on the refrigerator 1 may include a signal that occurs from the refrigerator connected to a commercial power source.

The power supplier 280 may supply power to the various components of the refrigerator 1 based on a control signal of the controller 360. For example, the power supplier 280 may supply power to the heat radiation fan 600 based on an operation control signal for the heat radiation fan 600 generated by the controller 360.

The user interface device 260 may allow the user to interact with the refrigerator 1.

The user interface device 260 may include the output interface 261 and the input interface 262.

The at least one output interface 261 may send various information relating to operation of the refrigerator 1 to the user by generating sensory information.

For example, the at least one output interface 261 may deliver information relating to the settings of the refrigerator 1 and operation of the refrigerator 1 to the user. The information relating to an operation of the refrigerator 1 may be output through a display, an indicator and/or voice. The at least one output interface 261 may include, for example, a liquid crystal display (LCD) panel, an indicator, a light emitting diode (LED) panel, a speaker, etc.

In an embodiment, the at least one output interface 261 may output sensory information (e.g., visual information, auditory information, etc.) relating to control of the refrigerator 1.

The at least one input interface 262 may convert sensory information received from the user into an electric signal.

When the user interface device 260 includes a touch screen display, the touch screen display may correspond to an example of the output interface 261 and the input interface 262.

The at least one input interface 262 may include an input device (e.g., a button, a knob, etc.) for receiving a user input to control an operation of the refrigerator 1.

Each button may include a visual indicator (e.g., text, an icon, etc.) that may indicate the function.

The at least one input interface 262 may include, for example, a tact switch, a push switch, a slide switch, a toggle switch, a micro switch, a touch switch, a touch pad, a touch screen, a jog dial, and/or a microphone.

In the disclosure, the button may be replaced by a user interface (UI) element, a tact switch, a push switch, a slide switch, a toggle switch, a micro switch, a touch switch, a touch pad, a touch screen, a jog dial, and/or a microphone.

The refrigerator 1 may process the user input received through the user interface device 260 and output information relating to the refrigerator 1 through the user interface device 260.

The refrigerator 1 may control the operation of the refrigerator 1 based on the user input received through the user interface device 260.

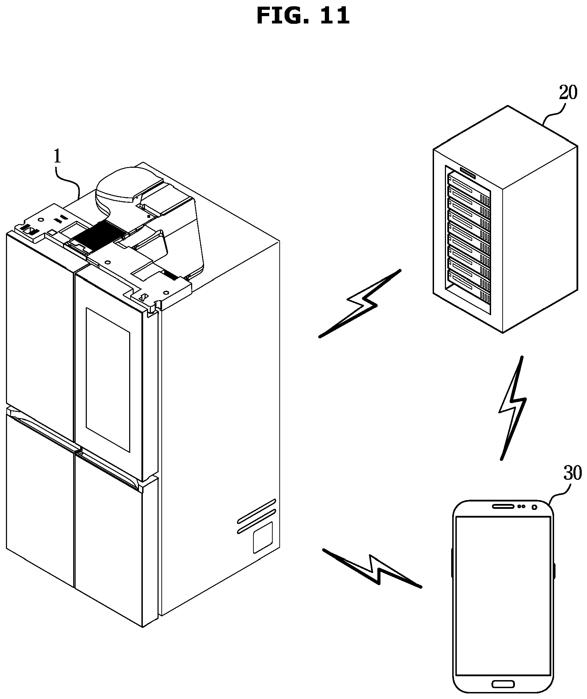

The refrigerator 1 may include the communication interface 270 for communicating with an external device (e.g., a server 20 or a user device 30, see FIG. 11) wiredly and/or wirelessly.

The communication interface 270 may include at least one of a short-range communication module or a long-range communication module.

The communication interface 270 may transmit data to the external device (e.g., the server 20 or the user device 30, see FIG. 11) or receive data from the external device. For this, the communication interface 270 may support establishment of a direct (e.g., wired) communication channel or a wireless communication channel between external devices (e.g., the server 20 or the user device 30, see FG. 11), and communication through the established communication channel. In an embodiment, the communication interface 270 may include a wireless communication module (e.g., a cellular communication module, a short-range wireless communication module or a GNSS communication module) or a wired communication module (e.g., a LAN communication module or a power-line communication module). A corresponding one of the communication modules may communicate with the external device (e.g., the server 20 or the user device 30, see FIG. 11) over a first network (e.g., a short-range communication network such as bluetooth, wireless-fidelity (Wi-Fi) direct or infrared data association (IrDA)) or a second network (e.g., a remote communication network such as a legacy cellular network, a fifth generation (5G) network, a next generation communication network, the Internet, or a computer network (e.g., a LAN or wide area network (WAN)). These various types of communication modules may be integrated into a single component (e.g., a single chip) or implemented as a plurality of separate components (e.g., a plurality of chips).

The short-range communication module may include a bluetooth communication module, a BLE communication module, an NFC module, a WLAN, e.g., Wi-Fi, communication module, a Zigbee communication module, an IrDA communication module, a WFD communication module, an UWB communication module, an Ant+ communication module, a uWave communication module, etc., without being limited thereto.

The long-range communication module may include a communication module for performing various types of long-range communication and include a mobile communication interface 270. The mobile communication interface 270 transmits or receives wireless signals to and from at least one of a base station, an external terminal, or a server in a mobile communication network.

In an embodiment, the communication interface 270 may communicate with the external device through a nearby access point (AP). The AP may connect a local area network (LAN) connected to the refrigerator 1 to a wide area network (WAN) connected to the server. The refrigerator 1 may be connected to the server through the WAN.

The refrigerator 1 may receive various signals (e.g., weather information or remote command) from the external device (e.g., the server 20 or the user device 30, see FIG. 11) through the communication interface 270.

The refrigerator 1 may transmit various signals to the external device (e.g., the server 20 or the user device 30, see FIG. 11) through the communication interface 270.

Various information received by the refrigerator 1 from the external device (e.g., the server 20 or the user device 30, see FIG. 11) through the communication interface 270 and various information transmitted by the refrigerator 1 to the external device (e.g., the server 20 or the user device 30) through the communication interface 270 will be described later with reference to FIG. 11.

The controller 360 may include at least one processor 361 for controlling operation of the refrigerator 1, and at least one memory 362 for storing a program and data for controlling the operation of the refrigerator 1.

The at least one memory 362 may store data required for various embodiments. The memory 362 may be implemented in the form of a memory 362 embedded in or detachable from the refrigerator 1 depending on the data storage use. For example, data for operating the refrigerator 1 may be stored in the memory 362 embedded in the refrigerator 1 and data for an extended function of the refrigerator 1 may be stored in the memory detachable from the refrigerator 1. In the meantime, the memory 362 embedded in the refrigerator 1 may be implemented with at least one of a volatile memory (e.g., a dynamic random access memory (DRAM), a static RAM (SRAM), or a synchronous dynamic RAM (SDRAM), etc.) or the non-volatile memory 362 (e.g., a one time programmable read only memory (OTPROM), a programmable ROM (PROM), an erasable and programmable ROM (EPROM), an electrically erasable and programmable ROM (EEPROM), a mask ROM, a flash ROM, a flash memory 362 (e.g., NAND flash or NOR flash), a hard drive or a solid state drive (SSD)). The memory detachable from the refrigerator 1 may be implemented in such a format as a memory card (e.g., compact flash (CF), secure digital (SD), micro-SD, mini-SD, extreme digital (xD), multi-media card (MMC), etc.) or an external memory (e.g., USB memory) connectable to a USB port.

The at least one processor 361 controls general operation of the refrigerator 1. Specifically, the at least one processor 361 may be connected to the respective components (e.g., the thermoelectric cooling device 400, the first speed sensor 111, the second speed sensor 112, the first temperature sensor 113, the second temperature sensor 114, the power supplier 280, the user interface device 260 and/or the communication interface 270) of the refrigerator 1 to control general operation of the refrigerator 1. For example, the at least one processor 361 may be electrically connected to the memory 362 to control general operation of the refrigerator 1. The processor 361 may be configured with one or more processors.

The at least one processor 361 may execute at least one instruction stored in the memory 362 to perform operation of the refrigerator 1 according to various embodiments.

The at least one processor 361 may include one or more of a central processing unit (CPU), a graphics processing unit (GPU), an accelerated processing unit (APU), a many integrated core (MIC), a digital signal processor (DSP), a neural processing unit (NPU), a hardware accelerator or a machine learning accelerator. The at least one processor 361 may control one or any combination of the other components of the refrigerator 1, and perform a communication related operation or data processing. The at least one processor 361 may execute at least one program or instruction stored in the memory 362. For example, the at least one processor 361 may execute the at least one instruction stored in the memory 362 to perform a method according to at least one embodiment of the disclosure.

FIG. 11 is a conceptual diagram illustrating an example of an entity to perform a method of controlling the refrigerator 1, according to an embodiment of the disclosure.

In an embodiment, the communicating of the refrigerator 1 with the user device 30 may include establishing direct connection of communication between the refrigerator 1 and the user device 30 and/or establishing indirect connection of communication between the refrigerator 1 and the user device 30 via the server 20.

The establishing of the direct connection of communication between the refrigerator 1 and the user device 30 may refer to the refrigerator 1 transmitting various signals directly to the user device 30 and the user device 30 transmitting various signals directly to the refrigerator 1.

The establishing of indirect connection of communication between the refrigerator 1 and the user device 30 through the server 20 may refer to an occasion when the refrigerator 1 transmits various signals to the server 20, which in turn forwards them to the user device 30, and the user device 30 transmits various signals to the server 20, which in turn forwards them to the refrigerator 1.

In the disclosure, the various signals may include information, data, control commands, etc.

In the disclosure, the user device 30 may refer to an electronic device capable of wireless communication, such as a smartphone, a personal computer (PC), etc.

In the disclosure, the server 20 may refer to a computing device capable of wireless communication.

Each of the server 20 and the user device 30 may also include a communication module for communicating with the refrigerator 1.

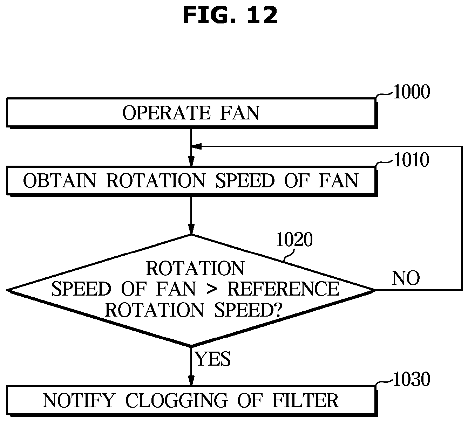

FIG. 12 illustrates an example of a flowchart of a method of controlling the refrigerator 1, according to an embodiment of the disclosure.

Referring to FIG. 12, the controller 360 may operate the fan 50, in 1000. The controller 360 may operate the heat radiation fan 600 and/or the cooling fan 800.

The rotation speed of the fan 50 may vary depending on the state of the filter 390. For example, referring to FIG. 8, when the filter 390 for filtering foreign materials of the air brought in from outside of the main body 100 is clogged, the inflow rate of air circulating in the heat radiation duct 700 may decrease, which leads to a decrease in air resistance in the heat radiation duct 700 and thus, to an increase in rotation speed of the heat radiation fan 600. In another example, although not shown, when the filter 390 is arranged at the inside air intake port 991 (see FIG. 3) in order to filter off the foreign materials of the air inside the storeroom 11 through the inside air intake port 992, the inflow rate of the air circulating in the cooling duct 900 may decrease, which leads to a decrease in air resistance in the cooling duct 900 and to an increase in rotation speed of the cooling fan 800.

The controller 360 may obtain rotation speed of the heat radiation fan 600. For example, the controller 360 may obtain the rotation speed of the heat radiation fan 600 by receiving information about the rotation speed of the heat radiation fan 600 detected by the first speed sensor 111.

The controller 360 may obtain rotation speed of the cooling fan 800. For example, the controller 360 may obtain the rotation speed of the cooling fan 800 by receiving information about the rotation speed of the cooling fan 800 detected by the second speed sensor 112.

In various embodiments, the controller 360 may notify clogging of the filter 390 in response to the rotation speed of the fan 50 being higher than a reference rotation speed.

In an embodiment, the controller 360 may notify clogging of the filter 390 in response to the rotation speed of the heat radiation fan 600 being higher than the reference rotation speed.

For example, the controller 360 may apply a preset voltage to the heat radiation fan motor, determine that the filter 390 is clogged when the rotation speed of the heat radiation fan 600 is higher than the reference rotation speed, and notify the clogging of the filter 390.

When the filter 390 is located in the cooling duct 900, in an embodiment, the controller 360 may notify clogging of the filter 390 in response to the rotation speed of the cooling fan 800 being higher than a reference rotation speed.

For example, the controller 360 may apply a preset voltage to the motor for the cooling fan 800, determine that the filter 390 is clogged when the rotation speed of the cooling fan 800 is higher than the reference rotation speed, and notify the clogging of the filter 390.

In other words, when the filter 390 is arranged at the outside air intake port 751 as shown in FIG. 8, the controller 360 may notify clogging of the filter 390 in response to the rotation speed of the heat radiation fan 600 being higher than the reference speed. On the other hand, although not shown, when the filter 390 is located at the inside air intake port 991 (see FIG. 3), the controller 360 may notify clogging of the filter 390 in response to the rotation speed of the cooling fan 800 being higher than the reference speed.

For convenience of explanation, the fan 50 will now be described as referring to the heat radiation fan 600.

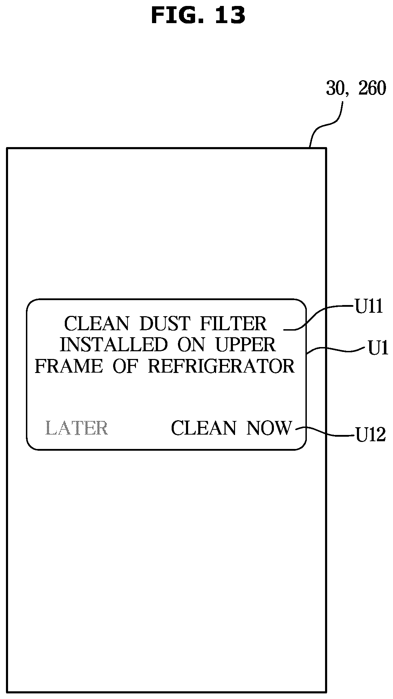

FIG. 13 illustrates an example of an interface provided by the refrigerator 1 or a user device, according to an embodiment of the disclosure.

Referring to FIG. 13, in various embodiments, the controller 360 may notify clogging of the filter 390 in response to the rotation speed of the fan 50 being higher than a reference rotation speed.

In an embodiment, the controller 360 may notify clogging of the filter 390 through the user interface device 260.

For example, the controller 360 may display a first interface U1 on the display to indicate that the filter 390 needs to be cleaned due to clogging of the filter 390 in response to the rotation speed of the fan 50 being higher than the reference rotation speed.

The first interface U1 may include a visual indicator U11 indicating that the filter 390 needs to be cleaned, and/or an interface element U12 for receiving a user input indicating the start of cleaning of the filter 390.

The user input indicating the start of cleaning of the filter 390 may include an input from the user through the first interface U1 when the user plans to replace or clean the filter 390.

In another example, the controller 360 may output a guidance voice indicating that the filter 390 needs to be cleaned through a speaker in response to the rotation speed of the fan 50 being higher than the reference rotation speed.

In an embodiment, the controller 360 may notify clogging of the filter 390 at predetermined intervals.

For example, after notifying the clogging of the filter 390 in response to the rotation speed of the fan 50 being higher than the reference rotation speed, the controller 360 may display the first interface U1 on the display or output guidance voice indicating that the filter 390 needs to be cleaned through a speaker at the predetermined intervals (e.g., every 24 hours) based on a failure to receive the user input indicating the start of cleaning of the filter 390 for a predetermined period of time (e.g., for 10 minutes).

In an embodiment, the controller 360 may notify clogging of the filter 390 based on an object outside the refrigerator 1 being detected.

For example, after notifying the clogging of the filter 390 in response to the rotation speed of the fan 50 being higher than the reference rotation speed, the controller 360 may display the first interface U1 on the display or output guidance voice indicating that the filter 390 needs to be cleaned through a speaker based on an object (e.g., the user) being detected within a certain distance from the main body 100 through the proximity sensor 116.

In an embodiment, the controller 360 may transmit information regarding the clogging of the filter 390 to the server 20 and/or the user device 30 through the communication interface 270 in response to the rotation speed of the fan 50 being higher than the reference rotation speed. The information regarding the clogging of the filter 390 may include whether the filter 390 is clogged, the rotation speed of the fan 50 and/or the reference rotation speed. The user device may notify the clogging of the filter 390.

For example, the controller 360 may transmit information regarding whether the filter 390 is clogged to the server through the communication interface 270 in response to the rotation speed of the fan 50 being higher than the reference rotation speed; the server may forward the information regarding whether the filter 390 is clogged to the user device 30; the user device 30 may display the first interface U1.

In another example, the controller 360 may transmit information about the rotation speed of the fan 50 and information about the reference rotation speed to the server 20 through the communication interface 270, and the server may determine whether the filter 390 is clogged in response to the rotation speed of the fan 50 being higher than the reference rotation speed and transmit information regarding whether the filter 390 is clogged to the user device 30.

In another example, the controller 360 may transmit information regarding whether the filter 390 is clogged to the user device 30 through the communication interface 270 in response to the rotation speed of the fan 50 being higher than the reference rotation speed, and the user device 30 may display the first interface U1.

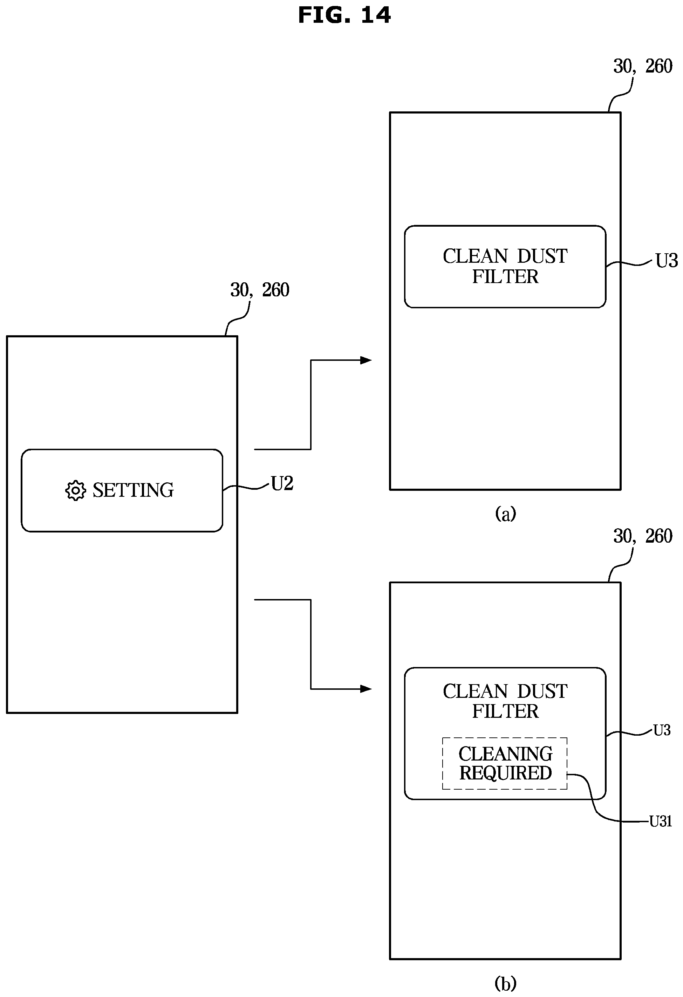

FIG. 14 illustrates another example of an interface provided by the refrigerator 1 or the user device 30, which is different from FIG. 13, according to an embodiment of the disclosure.

Referring to FIG. 14, the controller 360 may provide a second interface U2 for setting an operation of the refrigerator 1 through the output interface 261. For example, the controller 360 may display the second interface U2 through the display.

In an embodiment, the controller 360 may provide a third interface U3 through the output interface 261 for changing the settings for cleaning of the filter 390 based on a user input to change the settings for an operation of the refrigerator 1 being received through the second interface U2 (see (a) of FIG. 14 and (b) of FIG. 14).

For example, the controller 360 may display the third interface U3 through the display based on a user input to change the settings for an operation of the refrigerator 1 being received through the second interface U2 (see (a) of FIG. 14 and (b) of FIG. 14).

Specifically, the controller 360 may receive the user input to change settings for an operation of the refrigerator 1 through the second interface U2, and display the third interface U3 including a visual indicator U31 indicating that the filter 390 needs to be cleaned through the display in response to the rotation speed of the fan 50 being higher than the reference rotation speed.

Furthermore, the controller 360 may receive the user input to change settings for an operation of the refrigerator 1 through the second interface U2, and output guidance voice indicating that the filter 390 needs to be cleaned through a speaker in response to the rotation speed of the fan 50 being higher than the reference rotation speed.

Specifically, the controller 360 may display the third interface U3 including the visual indicator U31 indicating that the filter 390 needs to be cleaned through the display (see (b) of FIG. 14) or output guidance voice indicating that the filter 390 needs to be cleaned through a speaker only when the rotation speed of the fan 50 is higher than the reference rotation speed, and may display the third interface U3 that does not include the visual indicator U31 that indicates that the filter 390 needs to be cleaned through the display (see (a) of FIG. 14) when the rotation speed of the fan 50 is equal to or lower than the reference rotation speed.

The user device 30 may display the second interface U2 for setting an operation of the refrigerator 1.

The user device 30 may display the third interface U3 based on a user input to change the settings for an operation of the refrigerator 1 being received through the second interface U2.

For example, the user device 30 may receive a user input to change settings for an operation of the refrigerator 1 through the second interface U2, and display the third interface U3 including a visual indicator U31 indicating that the filter 390 needs to be cleaned based on the information regarding whether the filter 390 is clogged being received from the refrigerator 1 and/or the server 20.

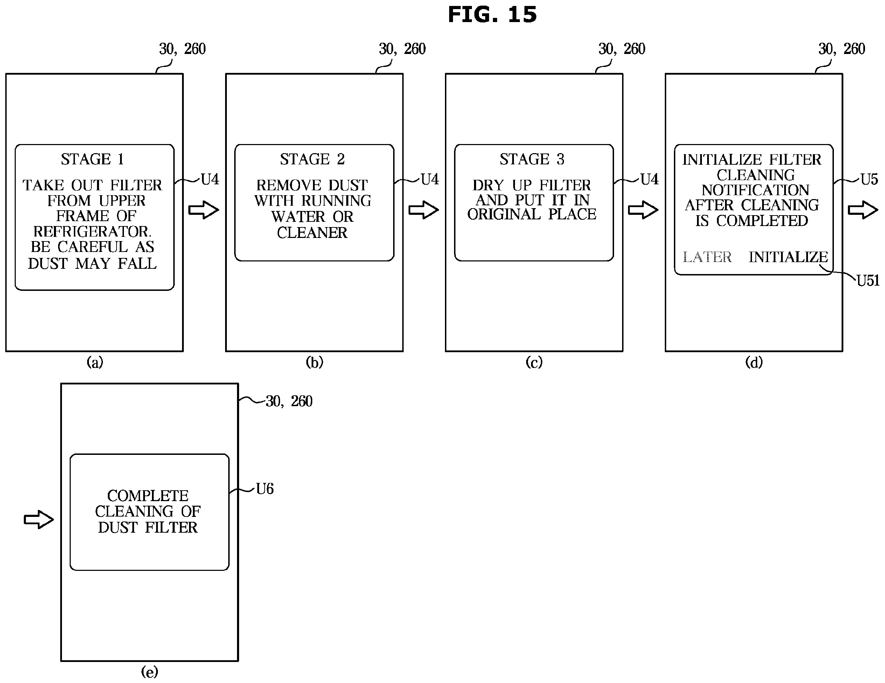

FIG. 15 illustrates an example of an interface provided by the refrigerator 1 or the user device when a user input is received through the interface of FIG. 13 or 14.

Referring to FIG. 15, the controller 360 may display a fourth interface U4 including information about a method of cleaning the filter 390 through the display based on a user input indicating the start of cleaning of the filter 390 being received through the first interface U1 (see FIG. 13).

Furthermore, the controller 360 may display the fourth interface U4 including information about a method of cleaning the filter 390 through the display based on a user input indicating the start of cleaning of the filter 390 being received through the third interface U3 (see FIG. 14).

The fourth interface U4 may sequentially include the information about the method of cleaning the filter 390. For example, the fourth interface U4 may provide a visual indicator that may notify the information about the method of cleaning the filter 390 to the user in stages (see (a), (b) and (c) of FIG. 15).

After displaying the fourth interface U4 through the display, the controller 360 may display a fifth interface U5 for receiving a user input that indicates completion of cleaning of the filter 390 through the display.

The fifth interface U5 may include an interface element U51 for receiving the user input that indicates completion of cleaning of the filter 390.

The controller 360 may display a sixth interface U6 indicating that cleaning of the filter is completed through the display or output guidance voice indicating that cleaning of the filter is completed through a speaker, based on the user input indicating that cleaning of the filter 390 is completed being received through the interface element U51.

Even when the user input indicating that cleaning of the filter is completed is received from the user, cleaning or replacement of the filter may not properly performed sometimes. Hence, there is a need to induce the user to clean or replace the filter by notifying the clogging of the filter again when the cleaning or replacement of the filter is not properly performed, which will now be described in an embodiment of the disclosure.

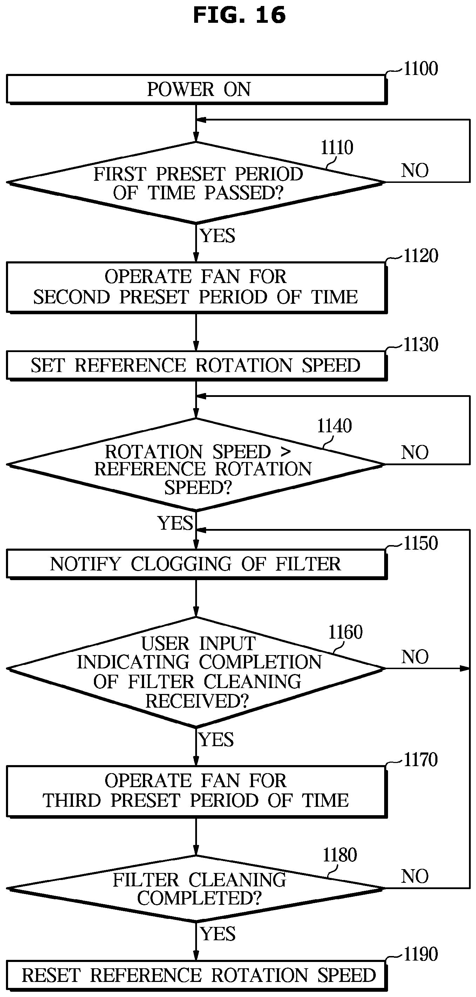

FIG. 16 illustrates an example of a flowchart of a method of controlling the refrigerator 1, according to an embodiment of the disclosure.

Referring to FIG. 16, the controller 360 may power on the refrigerator 1 through the power supplier 280, in 1100. The powering on of the refrigerator 1 may refer to an occasion when an operation of the refrigerator 1 connected to a commercial power source is started and power is supplied to various components of the refrigerator 1 through the power supplier 280.

In an embodiment, based on a lapse of a first preset period of time after the refrigerator 1 is powered on, the controller 360 may operate the fan 50 for a second preset period of time.

For example, after a lapse of the first preset period of time (e.g., one hour) in 1100 of FIG. 16 after the refrigerator 1 is powered on, the controller 360 may operate the fan for the second preset period of time (e.g., one minute) in 1120 of FIG. 16.

In an embodiment, the controller 360 may set the reference rotation speed in 1130.

For example, the controller 360 may obtain rotation speed of the heat radiation fan 600 detected by the first speed sensor 111 for the second preset period of time, and set a value larger than the rotation speed of the heat radiation fan 600 detected for the second preset period of time by a predetermined value to the reference rotation speed.

In the disclosure, the setting of the reference rotation speed may include setting the reference rotation speed according to the rotation speed of the fan 50 for the second preset period of time after a lapse of the first preset period of time after the refrigerator 1 is powered on, but the reference rotation speed may be set according to many different embodiments.

For example, the reference rotation speed may be set to be a preset rotation speed before the refrigerator 1 is installed at home, and the rotation speed of the fan 50 obtained right after the refrigerator 1 is powered on may be set as the reference rotation speed.

However, rotation speed of the fan 50 may vary according to the installation environment of the refrigerator 1, and considering time for system stabilization after the refrigerator 1 is powered on, the reference rotation speed will be described as being set based on the rotation speed of the fan 50 obtained for the second preset period of time after a lapse of the first preset period of time after the refrigerator 1 is powered on.

In an embodiment, in response to the rotation speed of the fan 50 being higher than the reference rotation speed in 1140, the controller 360 may notify clogging of the filter 390 in 1150.

For example, the controller 360 may notify the clogging of the filter 390 in response to the rotation speed of the fan 50 obtained in the second preset period of time being higher than the reference rotation speed set based on the rotation speed of the fan 50 obtained for the second preset period of time.

In an embodiment, the controller 360 may re-notify the clogging of the filter 390 when no user input indicating that cleaning of the filter 390 is completed is received, in 1150.

For example, when no user input indicating that cleaning of the filter 390 is completed after clogging of the filter 390 is notified, the controller 360 may re-notify the clogging of the filter 390 at preset intervals (e.g., every 24 hours).

In an embodiment, based on the user input indicating completion of cleaning of the filter 390 being received in 1160 after the clogging of the filter 390 is notified, the controller 360 may operate the fan 50 for a third preset period of time in 1170.

The controller 360 may determine whether the cleaning of the filter 390 is completed.

In an embodiment, the controller 360 may determine whether the cleaning of the filter 390 is completed based on a difference between the rotation speed of the fan 50 for the third preset period of time and the reference rotation speed.

For example, when the difference between the rotation speed of the fan 50 for the third preset period of time and the reference rotation speed being larger than a preset difference after the fan 50 is operated for the third preset time based on the user input indicating completion of cleaning of the filter 390 being received after the clogging of the filter 390 is notified, the controller 360 may determine that the cleaning of the filter 390 is not completed.

In another example, when the difference between the rotation speed of the fan 50 for the third preset period of time and the reference rotation speed being smaller than the preset difference after the fan 50 is operated for the third preset time based on the user input indicating completion of cleaning of the filter 390 being received after the clogging of the filter 390 is notified, the controller 360 may determine that the cleaning of the filter 390 is completed.

In an embodiment, when the cleaning of the filter 390 is determined as being completed in 1180, the controller 360 may reset the reference rotation speed in 1190.

In an embodiment, the controller 360 may re-notify clogging of the filter 390 in 1180 when it is determined that cleaning of the filter 390 is not completed.

In an embodiment, the controller 360 may notify clogging of the filter 390 in response to the rotation speed of the fan 50 being higher than the reset reference rotation speed.

For example, when it is determined that the cleaning of the filter 390 is completed and the reference rotation speed is reset, the controller 360 may notify clogging of the filter 390 in response to the rotation speed of the fan 50 being higher than the reset reference rotation speed.

In the disclosure, after the refrigerator 1 is powered on, in response to the rotation speed of the fan 50 being higher than the reference rotation speed, clogging of the filter 390 is notified, and the reference rotation speed is reset when it is determined that the cleaning of the filter 390 is completed. Specifically, the reference rotation speed may be reset based on the rotation speed of the fan 50 being higher than the reference rotation speed after clogging of the filter 390 is notified each time the clogging of the filter 390 is notified.

In the disclosure, the filter 390 or the fan 50 may have varying performance over time. Accordingly, it is more advantageous in that whether the filter 390 is clogged may be more accurately determined by updating the reference rotation speed for determining whether the filter 390 is clogged based on the rotation speed of the fan 50 each time cleaning of the filter 3 is completed.

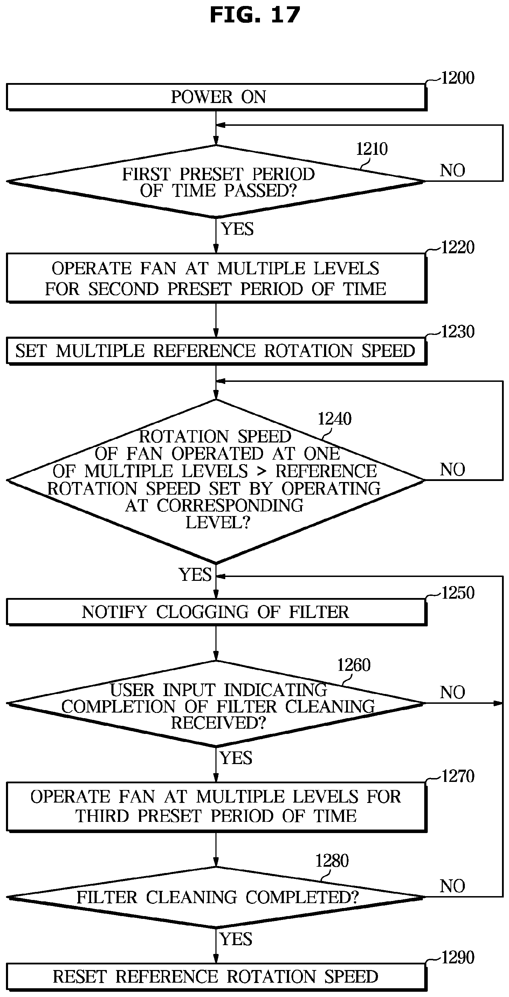

FIG. 17 illustrates an example of a flowchart of a method of controlling a refrigerator, according to an embodiment of the disclosure.

Referring to FIG. 17, based on a lapse of the first preset period of time in 1210 after the refrigerator 1 is powered on in 1200, the controller 360 may operate the fan 50 for the second preset period of time at multiple levels.

In an embodiment, the controller 360 may operate the fan 50 for the second preset period of time at multiple levels, in 1220.

For example, based on a lapse of the first preset period of time in 1210 after being powered on in 1200, the controller 360 may operate the fan 50 for the second preset period of time at multiple levels in 1230.

The operating of the fan 50 by the controller 360 for the second preset period of time at multiple levels may include operating the fan 50 at the first level..

The operating of the fan 50 by the controller 360 for the second preset period of time at multiple levels may include operating the fan 50 at the second level.

The operating of the fan 50 by the controller 360 for the second preset period of time at multiple levels may include operating the fan 50 at the third level.

The controller 360 may operate the fan 50 at multiple levels at preset intervals (e.g., every one minute) during the second preset period of time.

The multiple levels were described above, so the description will not be repeated.

For example, after operating the fan 50 for a preset period of time at the first level during the second preset period of time, the controller 360 may operate the fan 50 for the preset period of time at the second level and then operate the fan 50 for the preset period of time at the third level.

In an embodiment, the controller 360 may set a plurality of reference rotation speeds in 1230.

For example, the controller 360 may set a first reference rotation speed based on the rotation speed of the fan 50 obtained by operating the fan 50 for the preset period of time at the first level during the second preset period of time.

In another example, after operating the fan 50 for the preset period of time at the first level during the second preset period of time, the controller 360 may set the second reference rotation speed based on the rotation speed of the fan 50 obtained by operating the fan 50 for the preset period of time at the second level.

In another example, after operating the fan 50 for the preset period of time at the second level during the second preset period of time, the controller 360 may set the third reference rotation speed based on the rotation speed of the fan 50 obtained by operating the fan 50 for the preset period of time at the third level.

In the disclosure, the number of reference rotation speeds is not limited thereto, and may be set depending on various embodiments.

In various embodiments, the controller 360 may notify clogging of the filter in 1250, based on the rotation speed of the fan 50 operated at one of multiple levels being higher than the reference rotation speed set by operating at corresponding levels in 1240. In this case, the notifying of the clogging of the filter is equal to what is described above.

In an embodiment, the controller 360 may notify clogging of the filter 390 in response to the rotation speed of the fan 50 being higher than the first reference rotation speed when the fan 50 is operated at the first level after the first reference rotation speed is set.

In an embodiment, the controller 360 may notify clogging of the filter 390 in response to the rotation speed of the fan 50 being higher than the second reference rotation speed when the fan 50 is operated at the second level after the second reference rotation speed is set.

In an embodiment, based on the user input indicating completion of cleaning of the filter 390 being received after the clogging of the filter 390 is notified, the controller 360 may operate the fan 50 for the third preset period of time at multiple levels in 1270.

For example, based on the user input indicating completion of cleaning of the filter 390 being received after the clogging of the filter 390 is notified, the controller 360 may operate the fan 50 for the third preset period of time at the first level.

In another example, based on the user input indicating completion of cleaning of the filter 390 being received after the clogging of the filter 390 is notified, the controller 360 may operate the fan 50 at the first level and then operate the fan 50 at the second level during the third preset period of time.

In another example, based on the user input indicating completion of cleaning of the filter 390 being received after the clogging of the filter 390 is notified, the controller 360 may operate the fan 50 at the second level and then operate the fan 50 at the third level during the third preset period of time.

In an embodiment, the controller 360 may determine whether the cleaning of the filter 390 is completed based on a difference between the rotation speed of the fan 50 obtained by operating the fan 50 at multiple levels for the third preset period of time and the reference rotation speed set by operating at corresponding levels.

For example, the controller 360 may determine that the cleaning of the filter 390 is completed based on the difference between the rotation speed of the fan 50 obtained by operating the fan 50 at the first level for the third preset period of time and the corresponding first reference rotation speed being equal to or less than a reference difference.

In another embodiment, the controller 360 may determine that the cleaning of the filter 390 is completed based on a difference between the rotation speed of the fan 50 obtained by operating the fan 50 at the second level for the third preset period of time and the corresponding second reference rotation speed being equal to or less than the reference difference.

In another embodiment, the controller 360 may determine that the cleaning of the filter 390 is completed based on a difference between the rotation speed of the fan 50 obtained by operating the fan 50 at the third level for the third preset period of time and the corresponding third reference rotation speed being equal to or less than the reference difference.

In an embodiment, the controller 360 may reset the reference rotation speed when the cleaning of the filter 390 is determined as being completed.

For example, the controller 360 may reset the reference rotation speed when the cleaning of the filter 390 is determined as being completed.

Specifically, based on a difference between the rotation speed of the fan 50 and the first reference rotation speed when the fan 50 is operated at the first level during the third preset period of time, the controller 360 may determine whether the cleaning of the filter 390 is completed, and reset the first reference rotation speed when it is determined that cleaning of the filter 390 is completed.

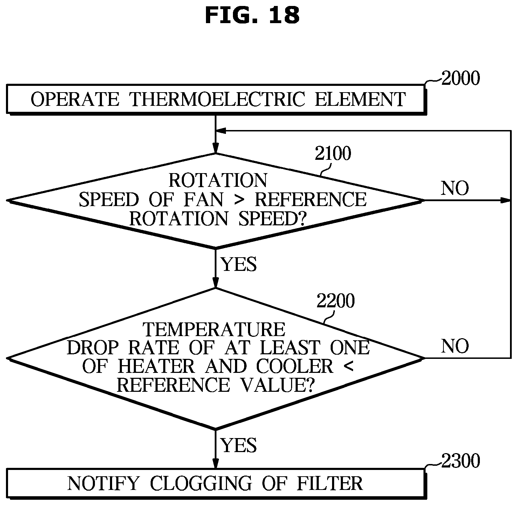

FIG. 18 illustrates an example of a flowchart of a method of controlling a refrigerator for notifying filter clogging based on rotation speed of a fan and temperature of a thermoelectric element, according to an embodiment of the disclosure.

Referring to FIG. 18, the controller 360 may operate the thermoelectric element 530, in 2000.

In an embodiment, in response to the rotation speed of the fan 50 being higher than the reference rotation speed in 2100 and a temperature drop rate of at least one of the heater 531 and the cooler 532 is smaller than a reference value in 2200 after the thermoelectric element 530 is operated, the controller 360 may notify clogging of the filter 390 in 2300.

For example, when the filter 390 is clogged, operation efficiency of the thermoelectric element 530 may be lowered because the air in the heat radiation duct 700 is not properly circulated. As a result, the rate of temperature change of the heater 531 and/or the cooler 532 may be lower than in a normal state during the operation of the thermoelectric element 530, so the controller 360 may notify the clogging of the filter 390 based on the rotation speed of the fan 50 being higher than the reference rotation speed and the rate of temperature change of at least one of the heater 531 and the cooler 532 being lower than a reference value.

According to an embodiment of the disclosure, a refrigerator may include a main body forming a storeroom; a thermoelectric element including a heater and a cooler; a fan configured to blow air heated by the heater out of the main body or blow air cooled by the cooler into the storeroom; a filter configured to filter off foreign materials in air brought in from outside of the main body by operation of the fan; and a controller configured to notify clogging of the filter in response to rotation speed of the fan being higher than a reference rotation speed.

The controller may be configured to, based on a lapse of a first preset period of time after the refrigerator is powered on, operate the fan for a second preset period of time, and based on the rotation speed of the fan during the second preset period of time, set the reference rotation speed.

The controller may operate the fan for a third preset period of time based on a user input indicating completion of filter cleaning being received after the clogging of the filter is notified.

The controller may determine whether cleaning of the filter is completed based on a difference between the rotation speed of the fan during the third preset period of time and the reference rotation speed.

The controller may reset the reference rotation speed in response to determining of completion of cleaning of the filter.

The controller may re-notify clogging of the filter in response to determining that cleaning of the filter is not completed.

The reference rotation speed may include a first reference rotation speed and a second reference rotation speed, and the controller may be configured to set the first reference rotation speed by operating the fan at a first level for the second preset period of time, set the second reference rotation speed by operating the fan at a second level higher than the first level for the second preset period of time, notify clogging of the filter 390 in response to the rotation speed of the fan operated at the first level being higher than the first reference rotation speed, and notify clogging of the filter 390 in response to the rotation speed of the fan operated at the second level being higher than the second reference rotation speed.

Based on a user input indicating that cleaning of the filter is completed being received after clogging of the filter is notified, the controller may be configured to determine whether cleaning of the filter is completed based on a difference between the rotation speed of the fan operated at the first level for the third preset period of time and the first reference rotation speed, and determine whether cleaning of the filter is completed based on a difference between the rotation speed of the fan operated at the second level for the third preset period of time and the second reference rotation speed.

The controller may be configured to notify clogging of the filter in response to the rotation speed of the fan being higher than the reference rotation speed and a temperature drop rate of at least one of the heater and the cooler being smaller than a reference value after the thermoelectric element is operated.

A communication interface for communicating with an external device may be further included, and the controller may be configured to transmit information regarding the clogging of the filter to the external device through the communication interface in response to the rotation speed of the fan being higher than the reference rotation speed.

According to an embodiment of the disclosure, a method of controlling a refrigerator including a main body forming a storeroom, a thermoelectric element including a heater and a cooler, a fan for blowing air heated by the heater to outside of the main body or blowing air cooled by the cooler into the storeroom, and a filter for filtering off foreign materials in air brought in from outside of the main body by operation of the fan may include notifying clogging of the filter in response to rotation speed of the fan being higher than a reference rotation speed.

The method of controlling the refrigerator may further include, based on a lapse of a first preset period of time after the refrigerator is powered on, operating the fan for a second preset period of time, and based on the rotation speed of the fan during the second preset period of time, setting the reference rotation speed.

The method of controlling the refrigerator may further include operating the fan for a third preset period of time based on a user input indicating completion of filter cleaning being received after the clogging of the filter is notified.

The method of controlling the refrigerator may further include determining whether cleaning of the filter is completed based on a difference between the rotation speed of the fan during the third preset period of time and the reference rotation speed.

The method of controlling the refrigerator may further include resetting the reference rotation speed in response to determining that cleaning of the filter is completed.

The method of controlling the refrigerator may further include renotifying clogging of the filter in response to determining that cleaning of the filter is not completed.

The reference rotation speed may include a first reference rotation speed and a second reference rotation speed, the method of controlling the refrigerator may further include setting the first reference rotation speed by operating the fan at a first level for the second preset period of time, and setting the second reference rotation speed by operating the fan at a second level higher than the first level for the second preset period of time, and the notifying of the clogging of the filter may include notifying clogging of the filter in response to the rotation speed of the fan operated at the first level being higher than the first reference rotation speed, and notifying clogging of the filter in response to the rotation speed of the fan operated at the second level being higher than the second reference rotation speed.

Based on a user input indicating that cleaning of the filter is completed being received after clogging of the filter is notified, the method of controlling the refrigerator may further include determining whether cleaning of the filter is completed based on a difference between the rotation speed of the fan operated at the first level for the third preset period of time and the first reference rotation speed, and determining whether cleaning of the filter is completed based on a difference between the rotation speed of the fan operated at the second level for the third preset period of time and the second reference rotation speed.

The notifying of the clogging of the filter may include notifying clogging of the filter in response to the rotation speed of the fan being higher than the reference rotation speed and a temperature drop rate of at least one of the heater and the cooler being smaller than a reference value after the thermoelectric element is operated.

The method of controlling the refrigerator may further include notifying information regarding the clogging of the filter to an external device in response to rotation speed of the fan being higher than a reference rotation speed.

Meanwhile, the embodiments of the disclosure may be implemented in the form of a recording medium for storing instructions to be carried out by a computer. The instructions may be stored in the form of program codes, and when executed by a processor, may generate program modules to perform operations in the embodiments of the disclosure. The recording media may correspond to computer-readable recording media.

The computer-readable recording medium includes any type of recording medium having data stored thereon that may be thereafter read by a computer. For example, it may be a read only memory (ROM), a random access memory (RAM), a magnetic tape, a magnetic disk, a flash memory, an optical data storage device, etc.

The computer-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a recording medium (e.g., a compact disc read only memory (CD-ROM)), through an application store (e.g., play store^{™}), directly between two user devices (e.g., smart phones), or online (e.g., downloaded or uploaded). In the case of online distribution, at least part of the computer program product (e.g., a downloadable app) may be at least temporarily stored or arbitrarily created in a recording medium that may be readable to a device such as a server of the manufacturer, a server of the application store, or a relay server.

The embodiments of the disclosure have thus far been described with reference to accompanying drawings. It will be obvious to those of ordinary skill in the art that the disclosure may be practiced in other forms than the embodiments of the disclosure as described above without changing the technical idea or essential features of the disclosure. The above embodiments of the disclosure are only by way of example, and should not be construed in a limited sense.

## Claims

1. A refrigerator comprising:
a main body forming a storeroom;
a thermoelectric element including a heater and a cooler, the cooler configured to cool air inside the storeroom;
a fan configured to operate to bring air from outside the main body to the heater to be heated by the heater and exhaust the heated air to outside the main body;
a filter configured to filter foreign materials from the air brought from outside the main body to the heater by operation of the fan; and
a controller configured to notify that the filter is clogged in response to a rotation speed of the fan being higher than a reference rotation speed.

2. The refrigerator of claim 1, wherein
the controller is further configured to:
based on a lapse of a first period of time after the refrigerator is powered on, operate the fan for a second period of time, and
based on the rotation speed of the fan during the second period of time, set the reference rotation speed.

3. The refrigerator of claim 2, wherein the controller is further configured to, based on an input indicating the filter is clean being received after notification that the filter is clogged, operate the fan for a third period of time.

4. The refrigerator of claim 3, wherein the controller is further configured to, based on a difference between the rotation speed of the fan during the third period of time and the reference rotation speed, determine whether the filter is clean.

5. The refrigerator of claim 4, wherein the controller is further configured to reset the reference rotation speed in response to determination that the filter is clean.

6. The refrigerator of claim 4, wherein the controller is further configured to notify that the filter is clogged in response to determination that the filter is not clean.

7. The refrigerator of claim 2, wherein
the reference rotation speed includes:
a first reference rotation speed, and
a second reference rotation speed, and
the controller is further configured to:
operate the fan at a first level for the second period of time and based on the rotation speed of the fan operated at the first level, set the first reference rotation speed,
operate the fan at a second level higher than the first level for the second period of time and based on the rotation speed of the fan operated at the second level, set the second reference rotation speed,
notify that the filter is clogged in response to the rotation speed of the fan operated at the first level being higher than the first reference rotation speed, and
notify that the filter is clogged in response to the rotation speed of the fan operated at the second level being higher than the second reference rotation speed.

8. The refrigerator of claim 7, wherein
the controller is further configured to:
based on an input indicating the filter is clean being received after notification that the filter is clogged,
operate the fan at the first level for a third period of time and based on a difference between the rotation speed of the fan operated at the first level for the third period of time and the first reference rotation speed, determine whether the filter is clean, and
operate the fan at the second level for the third period of time and based on a difference between the rotation speed of the fan operated at the second level for the third period of time and the second reference rotation speed, determine whether the filter is clean.

9. The refrigerator of claim 1, wherein
the thermoelectric element is configured to operate so that a rate of temperature change of at least one of the heater and the cooler increases, and
the controller is further configured to:
notify that the filter is clogged in response to:
the rotation speed of the fan being higher than the reference rotation speed, and
after the thermoelectric element is operated, the rate of temperature change of the at least one of the heater and the cooler is smaller than a reference value.

10. The refrigerator of claim 1, further comprising:
a communication interface configured to communicate with an external device,
wherein the controller is further configured to transmit information regarding the filter being clogged to the external device through the communication interface in response to the rotation speed of the fan being higher than the reference rotation speed.

11. A method of controlling a refrigerator including a main body forming a storeroom, a thermoelectric element including a heater and a cooler, the cooler configured to cool air inside the storeroom, a fan configured to operate to bring air from outside the main body to the heater to be heated by the heater and exhaust the heated air outside the main body, and a filter configured to filter foreign materials from the air brought from outside the main body to the heater by operation of the fan, and a controller, the method comprising:
by the controller, notifying that the filter is clogged in response to a rotation speed of the fan being higher than a reference rotation speed.

12. The method of claim 11, further comprising:
by the controller,
based on a lapse of a first period of time after the refrigerator is powered on, operating the fan for a second period of time, and
based on the rotation speed of the fan during the second period of time, setting the reference rotation speed.

13. The method of claim 12, further comprising:
by the controller,
based on an input indicating the filter is clean being received after notification that the filter is clogged, operating the fan for a third period of time.

14. The method of claim 13, further comprising:
by the controller,
based on a difference between the rotation speed of the fan during the third period of time and the reference rotation speed, determining whether the filter is clean.

15. The method of claim 14, further comprising:
by the controller,
resetting the reference rotation speed in response to determining that the filter is clean.
